# EUROPEAN PATENT SPECIFICATION

(11) **EP 3 968 590 B1**
(45) Date of publication and mention of the grant of the patent: **23.08.2023**
(21) Application number: 20195497.1
(22) Date of filing: 10.09.2020
(51) Int. Cl.: H04W 12/06, H04W 12/08

(54) **COMMUNICATION NETWORK COMPONENT AND METHOD**
KOMMUNIKATIONSNETZWERKKOMPONENTE UND -VERFAHREN
COMPOSANT DE RÉSEAU DE COMMUNICATION ET PROCÉDÉ

(43) Date of publication of application: 16.03.2022
(73) Proprietor: NTT DOCOMO, INC., Chiyoda-ku Tokyo 100-6150 (JP)
(72) Inventor: SAMA, Malla Reddy, 80687 Munich (DE); GUERZONI, Riccardo, 80687 Munich (DE); THAKOLSRI, Srisakul, 80687 Munich (DE); MINOKUCHI, Atsushi, Tokyo, 100-6150 (JP); KIESS, Wolfgang, 56218 Mülheim-Kärlich (DE)
(74) Representative: Viering, Jentschura & Partner mbB Patent- und Rechtsanwälte

(56) References cited:
- WO-A1-2019/120493
- US-A1- 2019 375 373

## Description

### Technical Field

Various embodiments relate generally to a communication network component, communication devices, a method, and a computer-readable medium.

### Background

There are many benefits of using unique identifiers, which are arranged to identify a communication device, especially on a mobile network. Certain regulatory requirements may be applied to certain devices or communication between networks may be possible by simply using the unique identifiers of the devices. Alternatively, a service operator may be able to provide its service to certain communication devices according to the subscription properties related to the unique identifier of the communication device or of the subscriber. The service operator may also be able to reject providing service to certain communication devices in case the communication devices do not belong to the subscribers of the service operator. Accordingly, the management of subscribers is performed using unique identifiers provided by the communication devices when they connect to a network.

In the example of a mobile communication network, a communication service provider may provide a SIM (Subscriber Identity Module) card to its subscriber, and the sim card may carry the unique identifier required for communication with the network of the service provider. The service provider also stores the unique identifier and the information of the subscriber corresponding to the unique identifier in a centralized entity in the mobile network. The centralized system may be HLR (Home Location Register) for 2G or 3G, HSS (Home Subscriber Server) in 4G, and UDM/UDR (Unified Data Management/Unified Data Repository) in 5G. The communication device which uses the SIM card transmits the unique identifier, or its derivative, to the communication network, so the communication network could identify the subscriber and provide the communication services according to the subscription of the subscriber.

The number of communication devices which can connect to a mobile radio communication network has increased recently, as the connectable wearable communication devices, smart vehicles, smart home technologies, and smart city applications have started to being used extensively. Inherently, these communication devices may use unique identifiers to connect to the mobile radio communication network and the number of unique identifiers that are connected to the mobile radio communication network has increased rapidly. Such an increase may make the management of identification cumbersome, as the communication devices may need to be registered and identified by the service provider in order to use the communication service provided by the service provider. There may also be certain centralized architecture issues as the identification data on the centralized systems and data traffic may increase only for the identification of communication devices, which would cause scalability and performance issues. Additionally, the security of the communication devices when connecting with static unique identifiers is another concern, because there may be certain methods to identify the identity of the subscriber by intercepting the communication, or alternatively to deceive the service provider by using the unique identifier of another communication device. It may be desirable to address at least one of the issues above.

WO 2019/120493 A1 discloses an apparatus to allow users to share resources such as houses, apartments, cars or other property items between different users.

US 2019/375373 A1 discloses methods and an apparatus to secure network devices, and to authenticate these devices.

### Summary

The invention is defined by the subject matter of the independent claims. Advantageous enhancements are subject to the dependent claims.

Various embodiments provide a communication network component, including: a receiver configured to receive a connection request from a first communication device, wherein the connection request includes an indication to a smart contract established for providing access to a communication service for a second communication device, and a communication service key for identification of the first communication device; and one or more processors configured to determine whether the first communication device is allowed to access the communication service according to the smart contract established for providing access to the communication service for the second communication device, based on the communication service key for identification of the first communication device; and to allow the first communication device to use the communication service according to the smart contract established for providing access to the communication service for the second communication device, in case the first communication device is allowed to access the communication service according the smart contract established for providing access to the communication service for the second communication device; wherein the first communication device and the second communication device are two different devices.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:
FIG. 1 shows an exemplary unique identifier in a conventional communication system;
FIG. 2 shows another exemplary unique identifier in a conventional communication system;
FIG 3 shows an exemplary communication flow in a conventional mobile radio communication system;
FIG. 4 shows schematically an exemplary illustration of an architecture of a mobile radio communication network;
FIG 5 shows schematically an exemplary illustration of a portion of a mobile radio communication network in accordance with various embodiments;
FIG 6 shows schematically an exemplary illustration of a mobile radio communication network component in accordance with various embodiments;
FIG 7 shows schematically an exemplary illustration of a validation for a smart contract in accordance with various embodiments;
FIG 8 shows schematically an exemplary illustration of obtaining a communication service key of a communication device in accordance with various embodiments;
FIG 9 shows schematically an exemplary illustration of obtaining a communication service key of a communication device in accordance with various embodiments;
FIG 10 shows schematically an exemplary illustration of obtaining a communication service key of a communication device in accordance with various embodiments;
FIG 11 shows schematically an exemplary illustration of deriving a public or private key using another public or private key;
FIG 12 shows schematically an exemplary illustration for a communication flow in accordance with various embodiments;
FIG 13 shows schematically an exemplary illustration for a communication flow in accordance with various embodiments;
FIG 14 shows schematically an exemplary illustration for an alternative communication flow for determination of whether a communication device is allowed to use the communication service in accordance with various embodiments;
FIG 15 shows schematically an exemplary illustration for a communication flow in accordance with various embodiments;
FIG 16 shows schematically an exemplary illustration for a communication flow for revocation in accordance with various embodiments;
FIG 17 shows schematically another exemplary illustration for a communication flow for revocation in accordance with various embodiments;
FIG 18 shows schematically an exemplary illustration of a portion of another network in accordance with various embodiments;
FIG 19 shows schematically an exemplary illustration of a portion of another network in accordance with various embodiments;
FIG 20 shows schematically an exemplary flow diagram illustration of a method in accordance with various embodiments

### Description

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

The terms "processor" or "controller" as, for example, used herein may be understood as any kind of entity that allows handling data. The data may be handled according to one or more specific functions executed by the processor or controller. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

It is to be noted that each component or function described herein may be implemented by one or more processors.

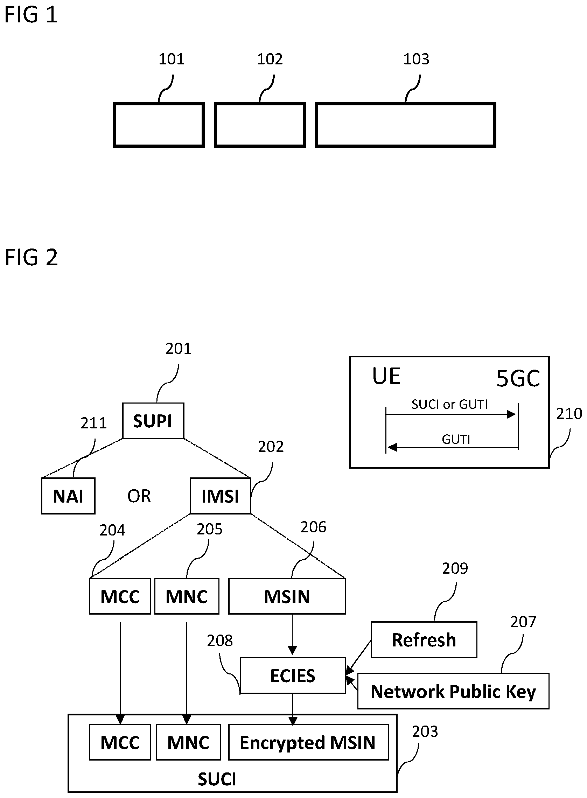

FIG. 1 shows an exemplary unique identifier in a conventional communication system. A unique identifier called "International Mobile Subscription Identity" or "IMSI" is allocated to each mobile subscriber by a SIM card provided by the communication service provider, or alternatively it is provided by the communication device in an integrated circuit. IMSI includes an MCC section 101 as a mobile country code, an MNC section 102 as a mobile network code, and an MSIN section 103 as a mobile subscriber identification number. IMSI is sent as rarely as possible and a randomly-generated TMSI is sent instead, however IMSI may still be needed to establish the communication with the communication network.

FIG. 2 shows another exemplary unique identifier in a conventional communication system. An identifier called "Subscription Permanent Identifier" or "SUPI" 201 is allocated to each subscriber provisioned in a USIM and it is also provisioned in UDM/UDR function in 5GC (Fifth Generation Core). SUPI 201 may be an IMSI 202. SUPI 201 may be transformed into a "Subscription Concealed Identifier" or "SUCI" 203 by using the MCC section 204 and MNC section 205 of IMSI 202 in plain text and encrypting MSIN section 206 of IMSI 202 with the public key of the home network 207 using Elliptic Curve Integrated Encryption Scheme 208 with a refreshing parameter 209. The resulting SUCI 203 is transmitted to 5GC by a user equipment (UE) and a "Globally Unique Temporary Identifier" or GUTI is received in response 210. SUPI may be a Network Access Identifier (NAI) 211 for other applications.

A SIM card, a USIM (Universal Subscriber Identity Module) or a UICC (Universal Integrated Chip Card) which are various types of SIM cards, is an integrated circuit that is intended to store information securely. The SIM card may carry the international mobile subscription identity (IMSI), or the subscription permanent identifier (SUPI). The SIM card may also carry a symmetric authentication key for network authentication (Kᵢ) and a public key of the mobile radio communication network to be used for encrypting messages (e.g. IMSI or SUPI) exchanged with the mobile radio communication network. The SIM card may also carry communication service information including network selection information for selecting the correct network according to the subscription.

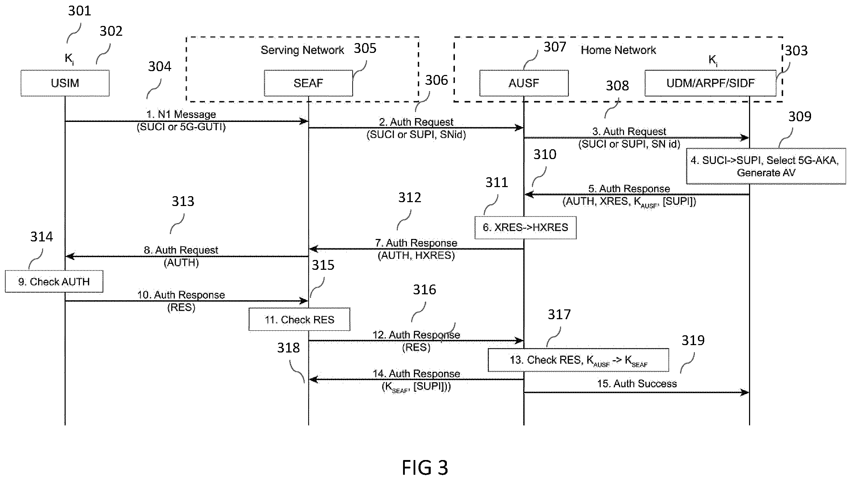

FIG 3 shows an exemplary communication flow in a conventional mobile radio communication system. A symmetric authentication key Kᵢ 301 for network authentication is provided in the user equipment (UE) in USIM 302 with the SUPI of the mobile radio communication service subscriber. The same Kᵢ key is also stored in UDM/Authentication credential Repository and Processing Function (ARPF) 303 corresponding to the SUPI of the mobile radio communication service subscriber. The authentication of the user equipment (UE) begins with the user equipment (UE) sending a registration request message 304 to a Security Anchor Function (SEAF) 305. The registration request message includes SUCI or 5G-GUTI as an identifier of the user equipment (UE). The SEAF 305 invokes a Nausf_UEAuthentication service by sending the authenticate request message 306 to an Authentication Server Function (AUSF) 307. The authenticate request message 306 includes SUCI or SUPI, and a server network name (SNid). After performing certain checks, the AUSF 307 sends an authentication request message 308 to the UDM/ARPF 303, which includes SUCI or SUPI, and a server network name (SNid). After receiving the authentication request message 308, the UDM/ARPF 303 invokes a subscription identifier de-concealing function (SIDF) to obtain SUPI if SUCI is received. Based on SUPI, the UDM/ARPF 303 chooses the authentication method as 5G AKA, and generates an authentication vector 309.

The authentication vector includes an authentication token (AUTH), an expected response message (XRES), and an intermediate authentication key (K_{AUSF}). The UDM/ARPF 303 sends an authentication response message 310 to the AUSF 307. The authentication response message 310 includes the authentication token (AUTH),.the expected response message (XRES), and the intermediate authentication key (K_{AUSF}). The AUSF 307 stores XRES with SUPI and computes HXRES 311 and a SEAF key (K_{SEAF}) using the expected response message (XRES), and the intermediate authentication key (K_{AUSF}). The AUSF 307 sends an authentication response message 312 to the SEAF 305, which includes the authentication token (AUTH), and the hash of the expected response (HXRES). The SEAF 305 sends an authentication request message 313 to the USIM of the user equipment (UE) 302.

The USIM 302 validates the authentication token (AUTH) by using the symmetric Kᵢ key 314 and generates a response message (RES). The USIM 302 sends an authentication response message 315 to the SEAF 305, which includes the response message (RES). The SEAF 305 checks and validates the response message (RES) 315. If validated, the SEAF 305 sends an authentication response message 316 to the AUSF 307, which includes the response message (RES). The AUSF 307 checks and validates the response message (RES). If the authentication is successful, the SEAF key (K_{SEAF}) becomes the anchor key 317. The AUSF 307 sends an authentication response message 318 to the SEAF 305. The AUSF sends an authentication success message 319 to the UDM/ARPF 303

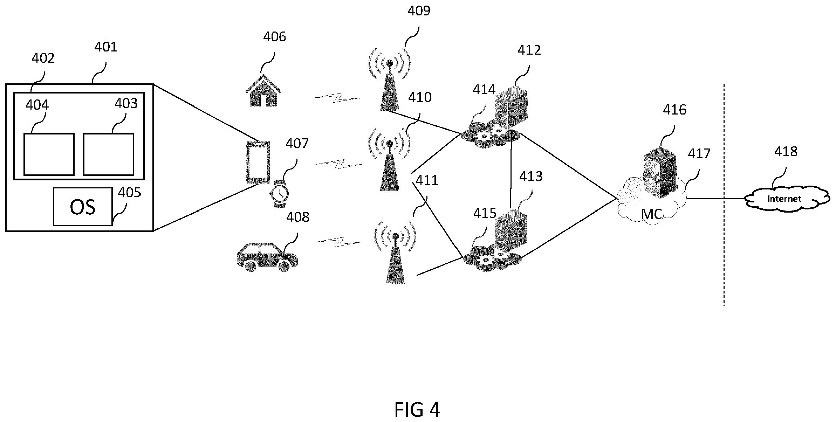

FIG. 4 shows an exemplary illustration of an architecture of a mobile radio communication network. The user equipment (UE) 401 may include a sofwareized UICC (s-UICC) 402 which includes at least a Mobile Network Operator (MNO) profile 403, allowing the user equipment (UE) 401 to identify which mobile network operator (MNO) the user equipment (UE) 401 is going to access. The user equipment (UE) may also include a mobile authentication centre 404 whichmay maintain and store the keys (e.g. Kᵢ symmetric authentication key) required to authenticate a communication service subscriber. The user equipment (UE) may also include an operating system 405. The mobile network operator (MNO) may be any mobile network operator (MNO), also referred to as a (communication) service provider, a wireless (communication) service provider, wireless (communication) carrier, cellular (communication) company, Public Land Mobile Network (PLMN), Non-Public Network (NPN) or mobile (communication) network carrier, which is the provider of wireless communications services.

The mobile radio communication network may include other user equipments (UE) 406, 407, 408. The mobile radio communication network may include various Radio Access Networks (RAN) 409, 410, 411, which may support various communication technologies. The mobile radio communication network may include one or multiple contract servers 412, 413 which may be located at one or multiple edge locations 414, 415.

In an example, contract servers 412, 413 may be distributed across the mobile radio communication network. Contract servers 412, 413 may be responsible for the management of contracts, provision, and authentication in the mobile radio communication network. In an example, a contract server 412, 413 may be a Home Subscriber Service (HSS) or a Unified Data Management (UDM). In an example, a contract server 412, 413 may include a plurality of network functions at different locations. In an example, a contract server 412, 413 may be composed of a plurality of entities. The mobile radio communication network may include a mobile gateway 416 on a mobile central cloud 417, which allows to access a communication service such as a connection to the internet 418.

A contract, or a smart contract, or iMobileContract (iMC), is a computer program or a transaction protocol that is intended to automatically execute, control, verify, document or enforce relevant events and actions according to the terms of an agreement. A smart contract may self-execute according to its terms. The code and the agreements contained in a smart contract may be located and executed on a decentralized network, such as blockchain.

The contract servers 412, 413 may be used as smart contract management functions. Smart contracts may be used in order to control or execute certain events, such as a service level agreement between a communication service provider and a communication service subscriber. Certain aspects of the communication service to be provided by the communication service provider, such as quality, or availability of the communication service may be realized by using smart contracts. In an example, by using smart contracts, both the communication service provider and the communication service subscriber are guaranteed certain agreed terms with respect to the communication service. In an example, by using the smart contract, the communication service subscriber is guaranteed to access the communication service. The communication service subscriber may be an individual person, or an authority (e.g. city authority), or a company, or an industry, or an organisation.

A smart contract may contain the terms of the smart contract and certain information with respect to the terms of the smart contract. Information in a smart contract may include an indication to a smart contract, such as an identifier. The smart contract may include subscriber information, and/or security keys. The security keys in the smart contract may be the public key of the communication service subscriber or the public key of a validated device of the communication service subscriber, and/or a symmetric key to be used for mobile radio communication network authentication. The smart contract may include certain limitations, such as the number of communication devices that are allowed to connect to the mobile radio communication network of the communication service provider, certain data limitations that may be applied for each communication device or to be used under the smart contract, or allowed communication services. The smart contract may include certain preferences of the communication service subscriber. The smart contract may include identifiers to a plurality of communication devices of the communication service subscriber.

In an example, the smart contract may include an identifier to a communication device of the communication service subscriber, which may be used to distribute information to other communication devices of the communication service subscriber. In an example, the smart contract may include an identifier to a communication device of the communication service subscriber, which may be a parent device, and the communication device of the communication service subscriber is used to allow communication between other communication devices of the communication service subscriber and the mobile radio communication network of the communication service provider. In an example, the smart contract may include an identifier to a key authority that will be used by a communication device of the communication service subscriber.

A key authority may be any function that is able to allocate/derive keys that may be required for the communication service, and/or validate and/or store keys of other communication devices and in particularly a communication service key of a communication device (e.g. of a first communication device). The key authority may be a network function. In an alternative, the key authority may be included by a communication device (e.g. a second communication device or a parent communication device) or by a communication network component. The key authority may be an isolated authority that runs independently as well.

The key authority may hold the master key root. In an example, the key authority may derive a private and a public key for a communication device. In an example, the key authority may create a communication device identifier for a communication device. In an example, the communication device identifier is a unique identifier in mobile radio communication network.

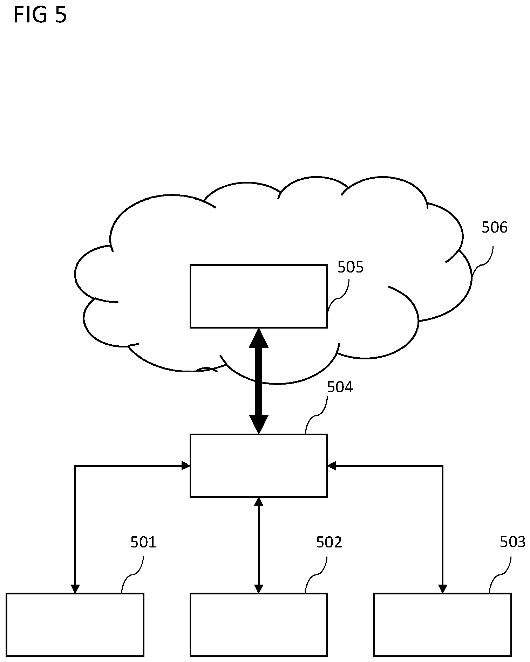

FIG 5 shows schematically an exemplary illustration of a portion of a mobile radio communication network in accordance with various embodiments. The mobile radio communication network includes a first communication device 501, 502, 503. In an example, the mobile radio communication network may include a plurality of first communication devices 501, 502, 503. The mobile radio communication network includes a second communication device 504 which may use the communication service 506 of the communication service provider through a communication network component 505 according to a smart contract between the communication service subscriber and the communication service provider. The second communication device 504 may also communicate with the first communication device 501, 502, 503. In an example, a communication device may be a mobile phone, or a wearable device, or a personal computer, or a vehicle, or a factory machine, or a robot, etc. In addition, a communication service provider may be an individual person or authority (e.g. city authority) or a company or industry or organisation.

The connection between the first communication devices 501, 502, 503 and the second communication device 504 may be provided by any communication technologies. The communication technology between the first communication devices 501, 502, 503 and the second communication device 504 may include a 3GPP technology, such as GSM, 2G, 3G, 4G, 5G, 6G, or other communication technologies, such as Bluetooth, IEEE 802.11, IEEE 802.15, NFC, WiMax, Zigbee, Z-Wave, etc. In an example, there may be a plurality of second communication devices 504 as well.

The relationship between the first communication devices 501, 502, 503 and the second communication devices 504 may be non-hierarchical. In accordance with various embodiments, the relationship between the first communication devices 501, 502, 503 and the second communication devices 504 may be hierarchical. In an example, the second communication device 504 which is validated through the smart contract may be a parent communication device, and the first communication device 501, 502, 503 which uses the smart contract validated by the second communication device 504 may be a child communication device.

In accordance with various embodiments, the second communication device 504 may be a communication device that has been validated for the smart contract for the communication service, and the first communication device 501, 502, 503 may be a communication device that requests access the communication service using the smart contract that has been validated for the second communication device 504. In an example, the second communication device may be the communcation device which establihed the smart contract for the communication service.

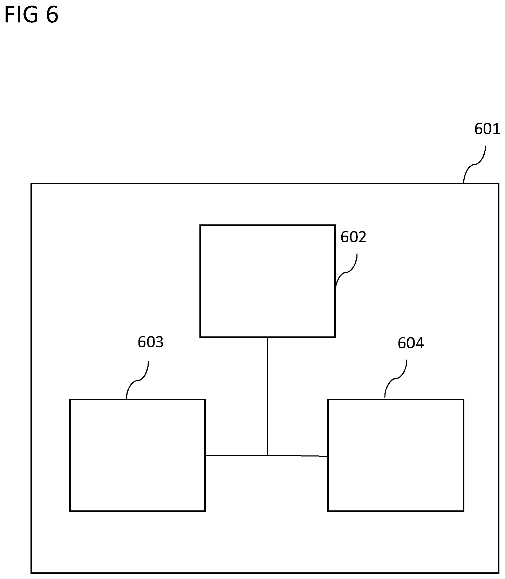

FIG 6 shows schematically an exemplary illustration of a portion of a communication network component 601 in accordance with various embodiments. The communication network component 601 includes one or more processors 602, and a receiver 603. In an example, the communication network component also includes a transmitter 604.

The receiver 603 is configured to receive a connection request from a first communication device. In an example, the first communication device is a communication device that requests access to a communication service of a communication service provider via the communication network component 601. In an example, the first communication device requests access to the communication service of the communication service provider according to a smart contract established for providing access to the communication service for a second communication device. In an example, a second communication device establishes the smart contract for the communication service with the communication service provider.

The connection request received from the first communication device may include an indication to the smart contract established for providing access to the communication service for the second communication device. The indication to the smart contract established for providing access to the communication service for the second communication device may include a smart contract identifier to identify the smart contract established for providing access to the communication service for the second communication device.

The connection request may include other information, such as an indication for the first communication device. In an example, the indication for the first communication device includes a smart contract indication. The smart contract indication indicates that the first communication device intends to access to a communication service according to the smart contract established for providing access to the communication service for a second communication device. In an example, the smart contract indication includes an identifier for the first communication device.

The receiver 603 is configured to receive a communication service key for identification of the first communication device. The communication service key for identification of the first communication device may be transmitted in the connection request received from the first communication device. Alternatively, the communication service key for identification of the first communication device may be transmitted to the communication network component 601 by the second communication device, or by a key authority. The communication service key for identification of the first communication device may be transmitted by another network function.

The communication service key for identification of the first communication device may be a public key of the first communication device from a public-private key pair, or it may be derived from the public-private key pair of the first communication device. It may be the private key of the first communication device as well. In an example, the communication service key is a generated and/or signed by the second communication device, or alternatively by a key authority.

The first communication device may distribute the public key so that other communication devices may encrypt the communication sent to the first communication device. Accordingly, only the first communication device would be able to decrypt the encrypted communication using the private key which is paired to the public key. The public-private key pair may be generated by any protocol, including Diffie-Hellman, DSS, ElGamal, RSA, YAK, etc. The communication service key (e.g. public-private key) for identification of the first communication device may be generated by the first communication device, or alternatively, it may be generated by the second communication device, or by a key authority, or by another network function in accordance with various embodiments.

The one or more processors 602 are configured to determine whether the first communication device is allowed to access the communication service according to the smart contract established for providing access to the communication service for the second communication device based on the communication service key of the first communication device. The one or more processors 602 are also configured to allow the first communication device to use the communication service according to the smart contract established for providing access to the communication service for the second communication device, in case the first communication device is allowed to access the communication service according to the smart contract established for providing access to the communication service for the second communication device.

According to various embodiments, the one or more processors 602 may be configured determine whether the first communication device is allowed to access the communication service according to the smart contract established for providing access to the communication service for the second communication device by verifyingthat the communication service key of the first communication device originates from the second communication device . In an example, verifying that the communication service key of the first communication device originates from the second communication device may include authorizing the communication key of the first communication device in accordance with various embodiments.

The communication service key of the first communication device may originate from the second communication device when the second communication device generates the communication service key of the first communication device. In an alternative, the communication service key of the first communication device may also originate from the second communication device, when the first communication device, or alternatively, the key authority, generates a public-private key pair for the first communication device, sends the key pair, or public key, to the second communication device, and the second communication device signs the public key with its own public key and/or private key.

The second communication device may send the resulting key, which is signed by the second communication device, to the first communication device. The first communication device may use the resulting key signed by the second communication device as the communication service key of the first communication device. In accordance with various embodiments, the (signed) public key of the first communication device is the communication service key of the first communication device.

In accordance with various embodiments, the one or more processors 602 of the communication network component 601 determines whether the first communication device is allowed to access the communication service according to the smart contract established for providing access to the communication service for the second communication device according to a validation response message received from the key authority, or from the second communication device. For that purpose, the transmitter 604 of the communication network component 601 may be configured to send a validation request message to the key authority to initiate the determination whether the first communication device is allowed to access the communication service.

In accordance with various embodiments, the validation request message may include the communication service key of the first communication device. The key authority may validate that the communication service key originates from the second communication device. The validation may include checking whether the communication service key is signed by the public key, or by the private key, of the second communication device. Alternatively, the validation may include checking whether the second communication device has generated the communication service key.

In an example, the validation request message may include an indication to the smart contract established for providing access to the communication service for the second communication device. In an example, the indication to the smart contract established for providing access to the communication service for the second communication device includes the smart contract identifier. In an example, the validation request message may include an identifier of the mobile network operator (MNO), or an identifier of the communication network component 601.

In an example, the validation request message may include an identifier of the first communication device. In this example, the second communication device generates the identifier of the first communication device according to the smart contract established for providing access to the communication service for the second communication device and sends the generated identifier to the first communication device. In an example, the validation request message may include the smart contract indication for the first communication device. In an example, the validation request message may include the smart contract identifier.

In accordance with various embodiments, the key authority may provide validation by searching information in a database, or via a network repository function, which indicates that the communication service key of the first communication device originates from the second communication device. Alternatively, the key authority may search information in a database, or via a network repository function, whether the first communication device may use the communication service using the identifier of the first communication device which may be generated by the second communication device.

In an example, the key authority receives the identifier of the first communication device and provides the communication service key of the first communication device in the validation response message to the communication network component 601 for validation. In this example, in response of receiving the communication service key in the validation response message, the communication network component 601 may encrypt a communication service information which is required for connecting to the communication service with the communication service key of the first communication device, so that only the first communication device, which holds the private pair to the communication service key may decrypt the communication service information. In accordance with various embodiments, the communication service information may include network selection information for selecting the mobile radio communication network.

In accordance with various embodiments, the key authority may use the private key of the second communication device in order to verify that the communication service key of the first communication device originates from the second communication device and sends a validation response message to the communication network component 601. In this example, it may be preferred that the key authority is the second communication device, or the second communication device includes the key authority, in order to ensure the security of the private key of the second communication device.

In accordance with various embodiments, when the public or private key of the second communication device is used to generate the communication service key of the first communication device, a reverse generation function may be used to obtain the public or the private key of the second communication device from the communication service key of the first communication device. In an example, the second communication device, which includes the key authority, may use the reverse function by using its private key, and the second communication device or the key authority may verify that the communication service key of the first communication device originates from the second communication device.

In accordance with various embodiments, the key authority may use the public key of the second communication device in order to verify that the communication service key of the first communication device originates from the second communication device, in case the communication service key of the first communication device is signed by the private key of the second communication device. Any known methods may be used to verify the signature of the second communication device on the communication service key of the first communication device.

In an example, the key authority may receive the public key generated by the first communication device and the communication service key of the first communication device which is generated by the first communication device and then signed by the second communication device for verifying that the communication service key of the first communication device is signed by the second communication device.

In accordance with various embodiments, the communication network component may include the key authority, and therefore any actions taken by the key authority may be performed by the communication network component 601 in this disclosure. In such examples, the validation request message and the validation response message may not be needed, and the one or more processors 602 are configured to determine the first communication device is allowed to use the communication service in accordance with various embodiments provided for the key authority.

In accordance with various embodiments, the one or more processors 602 of the communication network component 601 may be configured to use the public key of the second communication device in order to verify that the communication service key of the first communication device originates from the second communication device, in case the communication service key of the first communication device is signed by the private key of the second communication device. Any known methods may be used to verify the signature of the second communication device on the communication service key of the first communication device. In an example, the communication network component 601 may obtain the public key generated by the first communication device before it is signed by the second communication device for verification.

In accordance with various embodiments, the one or more processors 602 may be configured to update the smart contract established for providing access to the communication service for the second communication device, in case the first communication device is allowed to access the communication according to the smart contract established for providing access to the communication service for the second communication device. In an example, the smart contract may be updated by creating a sub-smart contract for the first communication device from the smart contract established for providing access to the communication service for the second communication device. Any known methods may be used to update the smart contract.

In accordance with various embodiments, the one or more processors 602 may be configured to reject the first communication device to use the communication service according to the smart contract established for providing access to the communication service for the second communication device, in case the first communication device is not allowed to access the communication service according to the smart contract established for providing access to the communication service for the second communication device. In an example, it may be/or rejected by the key authority or second communication device during the verification/validation process.

In accordance with various embodiments, the one or more processors 602 may be further configured to generate a symmetric authentication key for network authentication of the first communication device. In an example, an authentication token and a response token is generated by the one or more processors 602 in order to authenticate the first communication device using the generated tokens and the symmetric authentication key. In an example, the transmitter 604 of the communication network component 601 is configured to transmit the generated symmetric authentication key for the first communication device, and the authentication token to the first communication device. The communication network component 601 may encrypt generated symmetric authentication key using the communication service key of the first communication device, which is only first communication device able to decrypt using first communication device private key.

In an example, the first communication device is configured to receive the symmetric authentication key and the authentication token and use the symmetric authentication key with the authentication token in order to generate a first communication device response token. In an example, the first communication device is configured to transmit the first communication device response token to the communication network component 601. In an example, the receiver 603 of the communication network component 601 is configured to receive the first communication device response token, and one or more processors 602 are configured to validate the first communication device response token. In an example, the validation may be performed by comparing the first communication device response token with the response taken generated by the one or more processors 602.

In accordance with various embodiments, the communication network component 601 and its one or more processors may be configured to allow the first communication device to access the communication service according to a communication policy based on the smart contract established for providing access to the communication service for the second communication device. The communication policy may apply certain limitations or restrictions according to the smart contract. In an example, the communication policy is transmitted to the first communication device. In an example, the communication policy is transmitted to the first communication device, after the authentication is completed and the first communication device is allowed to use the communication service according to the smart contract.

In accordance with various embodiments, a revocation process may be initiated in order to revoke the access provided to the first communication device for the communication service. The revocation may be initiated by the first communication device or the second communication device, or alternatively the communication network component 601 may initiate the revocation. The decision of revocation is an internal logic of both the first communication device and the second communication device. For example, the second communication device may revoke access for the first communication device or for a plurality of communication devices, so that other communication devices may access the communication service according to the smart contract established for providing access to the communication service for the second communication device. Alternatively, the first communication device may revoke its access, because it is not going to access the communication service anymore.

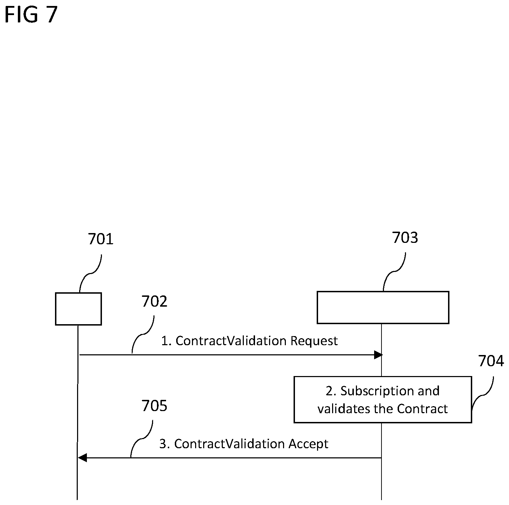

FIG 7 shows schematically an exemplary illustration of a validation for a smart contract in accordance with various embodiments, the smart contract for providing access to the communication service for a communication device may be established by using any known methods to establish a smart contract. In an example, the communication device establishes the smart contract for the communication service with the communication service provider. In an example, the communication device establishes the smart contract with validation of the communication device with a communication network component. According to various embodiments, a communication device 701 may access the communication service by validating the smart contract for the communication service with the mobile network operator (MNO) network.

In an example, the validation may be performed using the unique identifier of the communication service subscriber that uses the communication device, or the unique identifier of the communication device 701. In an example, the unique identifier of the communication device 701 is the unique identifier produced for the communication service subscriber. In an example, the smart contract to be validated includes the unique identifier to be used for validation.

In accordance with various embodiments, the communication device 701 sends a contract validation request message 702 to the communication network component 703. The contract validation request message may include the smart contract identifier, and/or the public key of the communication device 701, and/or the identifier of the communication device 701. In an example, at least a part of the contract validation request message is encrypted with the public key of the mobile network operator (MNO).

The communication network component 703 receives the contract validation request message. The communication network component 703 may verify the communication service subscription. Accordingly, the communication network component 703 may validate the smart contract 704. In an example, the validation of the smart contract also establishes the smart contract for providing access to the communication service for the communication device. The communication network component 703 may send a contract validation accept message 705 to the communication device. Accordingly, the communication device 701 is registered to the communication network component 703. In accordance with various embodiments in this disclosure, the communication device is the second communication device.

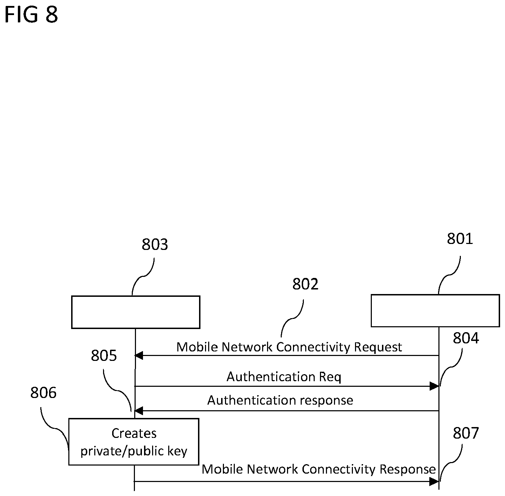

FIG 8 shows schematically an exemplary illustration of obtaining a communication service key for a communication device in accordance with various embodiments. The communication device may obtain the communication service key of the communication device from another communication device. In an example, a first communication device 801 may not access the communication service, because the first communication device 801 is not allowed (e.g. does not have contract) to access the communication service according to a smart contract. In an example, the first communication device 801 may not have the communication service information that is needed for accessing the communication service. In accordance with various embodiments, the first communication device 801 may send a mobile network connectivity request message 802 to a second communication device 803 for obtaining access to the communication service.

In accordance with various embodiments, the second communication device 803 may require to establish a trust relationship with the first communication device 801 for providing a mobile network connectivity response message. The second communication device 803 may send an authentication request message 804 to the first communication device 801 and the first communication device 801 may send an authentication response message 805 according to the authentication request message 804. Any known methods may be used for authentication between the first communication device 801 and the second communication device 803.

In response to the authentication between the first communication device 801 and the second communication device 803, and the establishment of a secure channel in between, the second communication device 803 generates a private key and a public key for the first communication device 801. In this example, the second communication device 803 is also a key authority. In accordance with various embodiments, the second communication device 803 generates a private key and/or a public key by deriving the private key and/or the public key using a public key or a private key of the second communication device.

In accordance with various embodiments, the second communication device sends the mobile network connectivity response message 807 to the first communication device 801 which includes the private key and public key (i.e. communication service key) for the first communication device 801 that originates from the second communication device 803.

At least one of the identifiers, such as the smart contract identifier for the smart contract established for providing access to the communication service for the second communication device, or the identifier of the first communication device, or the generated private key and the public key is stored in a memory of the key authority or the second communication device in order to use for determination of whether the first communication device is allowed to access the communication service according to the smart contract established for providing access to the communication service for the second communication device, in accordance with various embodiments.

In an example, the mobile network connectivity response message 807 may also include an indication to the smart contract for the communication service to be used by the first communication device 801 for access to the communication service. The smart contract is the smart contract which has been previously established for providing access to the communication service for the second communication device. In an example, the indication to the smart contract for the communication service includes the smart contract identifier. In an example, the mobile network connectivity response message 807 includes communication service information that is required for accessing the communication service.

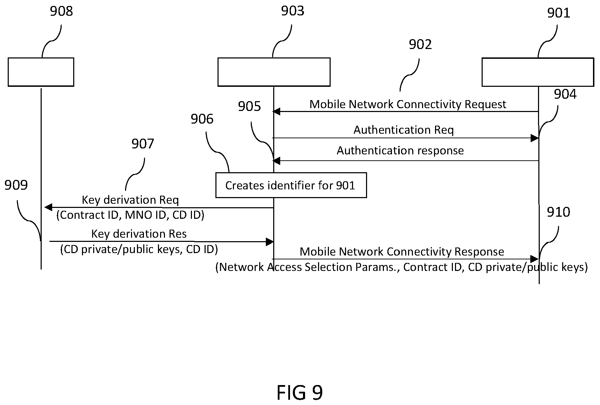

FIG 9 shows schematically another exemplary illustration of obtaining a communication service key for a communication device in accordance with various embodiments. The communication service key of a communication device may be obtained from a standalone key authority. In an example, a first communication device 901 may not access the communication service, because the first communication device 901 is not allowed to access the communication service according to a smart contract. In an example, the first communication device 901 may not have the communication service information that is needed for accessing the communication service. In accordance with various embodiments, the first communication device 901 sends a mobile network connectivity request message 902 to a second communication device 903 for obtaining access to the communication service.

In accordance with various embodiments, the second communication device 903 may require to establish a trust relationship with the first communication device 901 for providing a mobile network connectivity response message. The second communication device 903 may send an authentication request message 904 to the first communication device 901 and the first communication device 901 may send an authentication response message 905 according to the authentication request message 904. Any known methods may be used for authentication between the first communication device 901 and the second communication device 903.

In response to the authentication between the first communication device 901 and the second communication device 903, and the establishment of a secure channel in between, the second communication device 903 generates an identifier 906 for the first communication device 901. Accordingly, the second communication device 903 sends a key derivation request message 907 to a key authority 908. In this example, the key authority is a standalone key authority, or at least it is realized in a device or a network function other than the second communication device.

The key derivation request message 907 may include an indication to the smart contract for the communication service to be used by the first communication device 901. In an example, the indication to the smart contract for the communication service includes the smart contract identifier of the smart contract established for providing access to the communication service for the second communication device. The smart contract is the smart contract established for providing access to the communication service for the second communication device.

The key derivation request message 907 may include an identifier of the mobile network operator (MNO). The key derivation request message 907 may include the identifier of the first communication device 901. The identifier of the first communication device 901 may be generated 906 by the second communication device 903 according to the smart contract established for providing access to the communication service for the second communication device. The key derivation request message 907 may include the identifier of the communication network component.

The key authority 908 may generate a private key and a public key for the first communication device 901, and the generated private and public keys for the first communication device may be sent with a key derivation response message 909 back to the second communication device 903. In an example, the key authority 908 may sign the generated public key. Accordingly, the second communication device 903 may send a mobile network connectivity response message 910 to the first communication device 901, which includes the private key and public key for the first communication device 901 which originates from the second communication device 903.

At least one of the identifiers, such as the smart contract identifier for the smart contract established for providing access to the communication service for the second communication device, or the identifier of the first communication device, or the generated private key and the public key is stored in a memory of the key authority or the second communication device in order to use for determination of whether the first communication device is allowed to access the communication service according to the smart contract established for providing access to the communication service for the second communication device, in accordance with various embodiments.

In an example, the mobile network connectivity response message 910 may also include an indication to the smart contract for the communication service to be used by the first communication device 901. In an example, the indication to the smart contract for the communication service includes the smart contract identifier of the smart contract established for providing access to the communication service for the second communication device. In an example, the mobile network connectivity response 910 includes communication service information for the communication service.

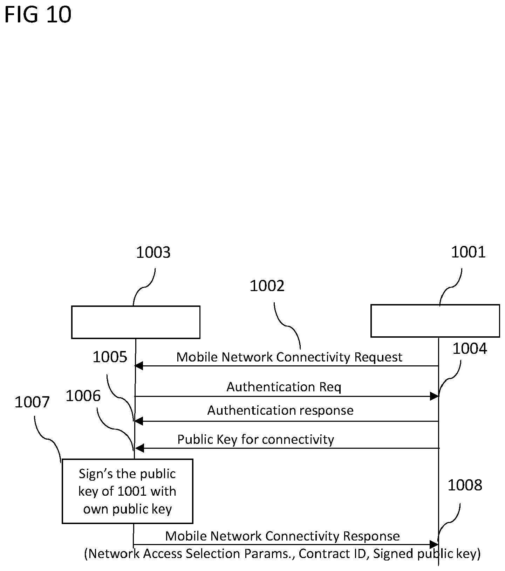

FIG 10 shows schematically another exemplary illustration of obtaining a communication service key of a communication device in accordance with various embodiments; The communication service key of a communication device may be obtained from another communication device. In an example, a first communication device 1001 may not access the communication service, because the first communication device 1001 is not allowed to access the communication service according to a smart contract. In an example, the first communication device 1001 may not have the communication service information that is needed for accessing the communication service. In accordance with various embodiments, the first communication device 1001 sends a mobile network connectivity request message 1002 to a second communication device 1003 for obtaining access to the communication service.

The mobile network connectivity request message may include the public key of the first communication device 1001. Alternatively, the public key of the first communication device may be sent at a later stage to the second communication device. The mobile network connectivity request message may also include an indication to the smart contract for the communication service to be used by the first communication device 901. In an example, the indication to the smart contract for the communication service includes the smart contract identifier of the smart contract established for providing access to the communication service for the second communication device. The smart contract is the smart contract established for providing access to the communication service for the second communication device.

In accordance with various embodiments, the second communication device 1003 may require to establish a trust relationship with the first communication device 1001 for providing a mobile network connectivity response message. The second communication device 1003 may send an authentication request message 1004 to the first communication device 1001 and the first communication device 1001 may send an authentication response message 1005 according to the authentication request message 1004. Any known methods may be used for authentication between the first communication device 1001 and the second communication device 1003.

In response to the authentication between the first communication device 1001 and the second communication device 1003, and the establishment of a secure channel in between, the first communication device 1001 may send its public key to the second communication device 1003. The second communication device 1003 signs the public key 1007 of the first communication device 1001 with the private key of the second communication device 1003. In another example, the second communication device 1003 may sign the public key of the first communication device 1001 with the private key of the second communication device 1003.

In accordance with various embodiments, the second communication device 1003 may send a mobile network connectivity response message 1008 to the first communication device 1001, which includes the public key for the first communication device 1001 which originates from the second communication device 1003, namely which is signed by the second communication device 1003.

In an example, the mobile network connectivity response message 1007 may also include an indication to the smart contract for the communication service to be used by the first communication device 1001 for using the communication service. In an example, the indication to the smart contract for the communication service includes the smart contract identifier for the smart contract established for providing access to the communication service for the second communication device. In an example, the mobile network connectivity response 1007 includes communication service information for the communication service.

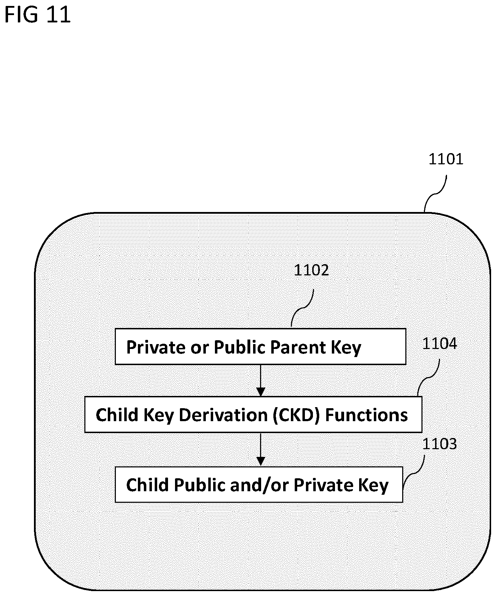

FIG 11 shows schematically an exemplary illustration of deriving a public or private key using another public or private key 1101. In accordance with various embodiments, the public and private keys to be generated may be generated hierarchically by using a parent public key or a parent private key 1102. In order to derive a child public key and/or private key 1103 from the parent public or private key 1102, a child key derivation (CKD) function 1104 may be used.

In an example, where the second communication device is the key authority, the second communication device may hold the parent seed and root of the tree. The seed may be 12 words or 128 bits, or alternatively, the seed may be 24 words or 256 bits. In an example, an extra 256 bits of entropy may be used to extend both private and public keys, in order to prevent the derived keys depending solely on parent private and/or public keys. In an example, HMAC-SHA512 algorithm is used to derive the keys. Accordingly, reverse order is not possible, and if the derived keys are compromised, it is not possible to derive the parent keys. The derived keys may be used as an input of the child key derivation (CKD) function for deriving more keys in a similar manner.

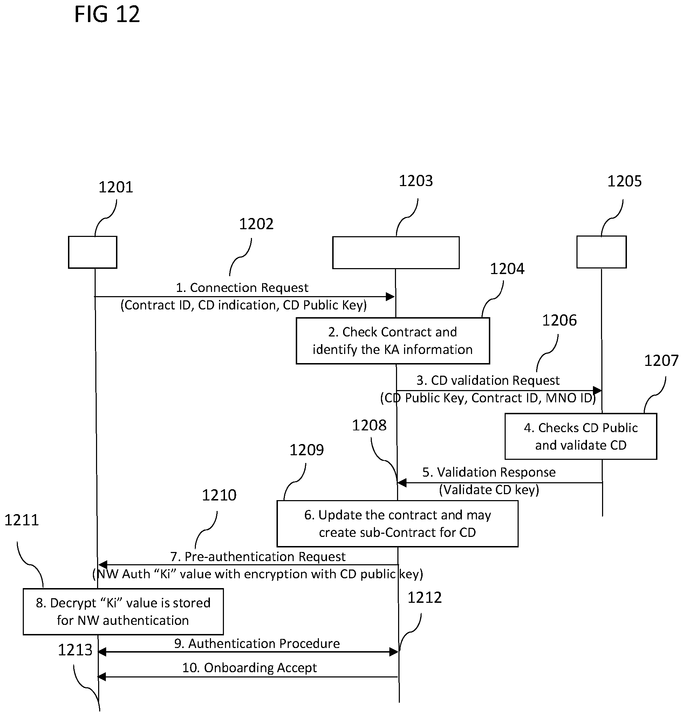

FIG 12 shows schematically an exemplary illustration for a communication flow in accordance with various embodiments. A first communication device 1201 sends a connection request 1202 to a communication network component 1203. The connection request 1202 may include an indication of a smart contract established for providing access to a communication service for a second communication device, which may include the smart contract identifier, an indication of the first communication device 1201 trying to establish a connection without being included in the smart contract, and a communication service key of the first communication device 1201. The smart contract may be the smart contract established for providing access to the communication service for the second communication device.

The communication network component 1203 may check the smart contract using the smart contract identifier and may identify the information regarding the key authority 1204. The key authority 1205 may be a standalone key authority or a second communication device 1205. Therefore, although the rest of the disclosure will be provided as if the key authority is the second communication device, it may also be a standalone key authority.

The communication network component 1203 sends a validation request message 1206 to the second communication device 1205. The validation request message 1206 may include the communication service key of the first communication device 1201, the indication of the smart contract which may be the smart contract identifier, and an identifier of the mobile network operator (MNO). The second communication device 1205 may verify that 1207 the communication service key of the first communication device 1201 originates from the second communication device 1205. The verification may be performed by any compatible methods in accordance with various embodiments.

In an example, the second communication device 1205 may identify the identifier of the communication device stored in its memory by using the communication service key received by the second communication device 1205. If the communication service key received by the second communication device 1205 matches a communication device, or in particular, to the first communication device 1201, the second communication device 1205 verifies that the communication service key of the first communication device 1201 originates from the second communication device 1205.

In an example, the second communication device 1205 may use a predetermined reverse function in order to find the source public or the private key which the received communication service key is derived from. The second communication device 1205 then may verify that the communication service key of the first communication device 1201 originates from the second communication device 1205.

After verification, the second communication device 1205 may send a validation response message 1208 to the communication network component 1203, which indicates the validation of the communication service key of the first communication device 1201. The communication network component 1203 receives the validation response message 1208. The communication network component 1203 then determines whether the first communication device 1201 is allowed to access the communication service according to the smart contract established for providing access to the communication service for the second communication device in accordance with the validation response message 1208.

In accordance with various embodiments, the communication network component 1203 may update the smart contract or it may create a subcontract 1209 for the first communication device 1201 for allowing the first communication device 1201 to access the communication service according to the smart contract established for providing access to the communication service for the second communication device.

The communication network component 1203 may transmit a pre-authentication request message 1210, which may include a symmetric authentication key for network authentication generated by the communication network component 1203. The symmetric authentication key may be encrypted with the communication service key of the first communication device 1201. The first communication device 1201 may store 1211 the symmetric authentication key for network authentication generated by the communication network component after decrypting the received request with the private key pair of the communication service key of the first communication device 1201. The authentication procedure may be completed 1212 between the first communication device 1201 and the communication network component 1203, and an onboarding accept 1213 may be transmitted to the first communication device 1201.

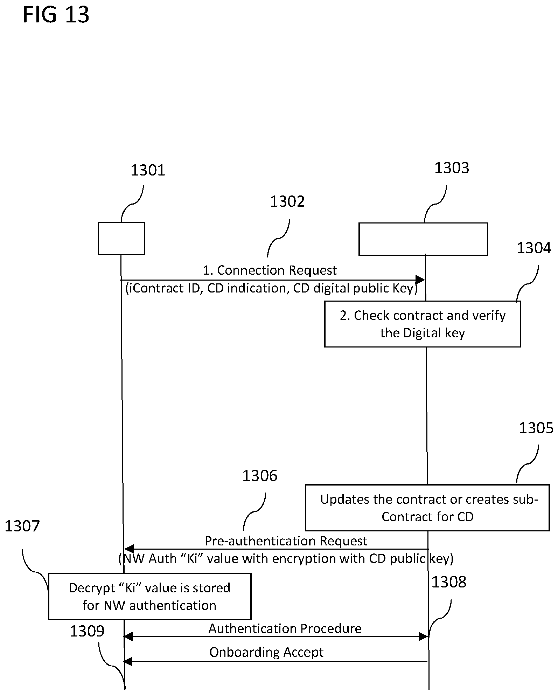

FIG 13 shows schematically another exemplary illustration for a communication flow in accordance with various embodiments. A first communication device 1301 sends a connection request 1302 to a communication network component 1303. The connection request 1302 may include an indication of a smart contract established for providing access to a communication service for a second communication device, which may include the smart contract identifier, an indication of the first communication device 1301 trying to establish a connection without being included in the smart contract, or a smart contract indication, and a communication service key of the first communication device 1301.

Accordingly, the communication network component 1303 determines whether the first communication device is allowed to access the communication service according to the smart contract established for providing access to the communication service for the second communication device. The determination may include verifying that the communication service key of the first communication device 1301 originates from a second communication device, and according to the verification, the communication network component 1303 determines that the first communication device 1301 is allowed to access the communication service according to the smart contract established for providing access to the communication service for the second communication device 1304.

In an example, the communication service key of the first communication device 1301 may have been signed by the second communication device in accordance with various embodiments. The second communication is the communication device for which the smart contract established for providing access to the communication service x. In an example, the second communication device may generate the communication service key of the first communication device 1301 by signing with its private key as provided in this disclosure.

Alternatively, the second communication device may the first communication device's public key using second communication device's public or private key. In this case, first communication device generated its public key based on its private key. Therefore, the communication network component may use the public key of the second communication device which the public key matches the private key that is used for signing to verify that the communication service key was signed by the second communication device. Any known methods may be used to verify that the communication service key was signed by the second communication.

The communication network component 1303 may update the smart contract or it may create a subcontract 1305 for the first communication device 1301 for allowing the first communication device 1301 to access the communication service according to the smart contract established for providing access to the communication service for the second communication device.

The communication network component 1303 may transmit a pre-authentication request message 1306, which may include a symmetric authentication key for network authentication generated by the communication network component 1303 and which may be encrypted with the communication service key of the first communication device 1301. The first communication device 1301 may store 1307 the symmetric authentication key for network authentication generated by the communication network component 1303 after decrypting the received request with the private key pair of the communication service key of the first communication device 1301. The authentication procedure may be completed 1308 between the first communication device 1301 and the communication network component 1303, and an onboarding accept 1309 may be transmitted to the first communication device 1301.

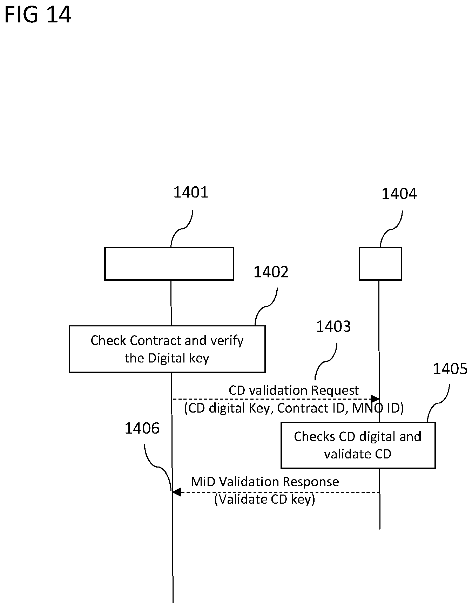

FIG 14 shows schematically an exemplary illustration for an alternative communication flow for determination of whether a communication device is allowed to use the communication service in accordance with various embodiments. In order to determine whether a first communication device is allowed to access the communication service according to the smart contract established for providing access to the communication service for the second communication device, the communication network component 1401 may check the smart contract and verify the communication service key 1402 of the first communication device.

In an example, the communication network component 1401 may transmit a validation request message 1403 to the key authority 1404. The key authority may be included by the second communication device. The validation request message 1403 may include the communication service key of the first communication device, the smart contract identifier for the smart contract established for providing access to the communication service for the second communication device, and the identifier of the mobile network operator (MNO). The key authority 1404 may verify whether the communication service key of the first communication device originates from the second communication device 1405, and transmits a validation response message 1406 to the communication network component 1401. The validation response message 1406 may include the validated communication service key of the first communication device.

The verification may be performed in accordance with various embodiments. In an example, the communication service key of the first communication device may have been signed by the second communication device in accordance with various embodiments. In an example, the second communication device generates the communication service key of the first communication device by signing with its private key as provided in this disclosure. In this case, the communication network component 1401 may use the public key of the second communication device which the public key matches the private key that is used for signing to verify that the communication service key was signed by the second communication device. Any known methods may be used to verify that the communication service key was signed by the second communication.

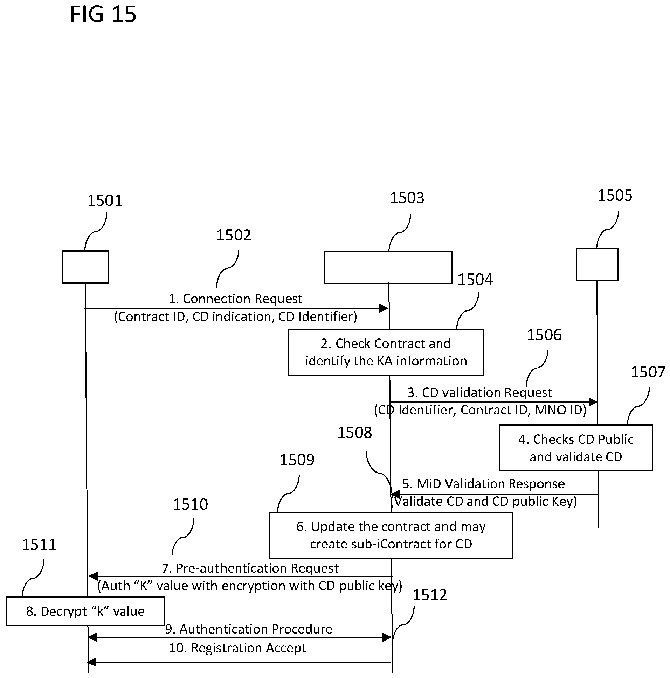

FIG 15 shows schematically another exemplary illustration for a communication flow in accordance with various embodiments. A first communication device 1501 sends a connection request 1502 to a communication network component 1503. The connection request 1502 may include an indication of a smart contract established for providing access to a communication service for a second communication device, which may include the smart contract identifier, an indication of the first communication device 1501 trying to establish a connection without being included in the smart contract or a smart contract indication, and an identifier for the first communication device 1501. The communication network component 1503 may identify and use certain information in the smart contract, such as identifying the key authority 1504 from the smart contract, that provides the validation service according to the smart contract identifier. The key authority 1505 may be a standalone key authority or the second communication device 1505. The rest of this example uses the second communication device as the key authority, but a standalone key may also be used for the same purpose.

The communication network component 1503 sends a validation request message 1506 to the second communication device 1505. The validation request message 1506 may include the identifier of the first communication device 1501, the indication of the smart contract which may be the smart contract identifier, and an identifier of the mobile network operator (MNO). The second communication device 1505 may verify that 1507 the identifier of the first communication device 1501 originates from the second communication device 1505. The verification may be performed by any compatible methods provided in this disclosure. In an alternative, the second communication device 1505 may verify that the received identifier of the first communication device 1501 matches the information stored in its memory for the first communication device 1501. Any known methods, or any methods provided in this disclosure may be used for confirming the identifier of the first communication device 1501.

After verification, the second communication device 1505 may transmit a validation response message 1508 to the communication network component 1503, which may include the validation confirmation of the first communication device 1501 and the communication service key of the first communication device 1501. The communication network component 1503 receives the validation response message 1208. The communication network component 1503 determines that the first communication device 1501 is allowed to access the communication service according to the smart contract established for providing access to the communication service for the second communication device. The communication network component 1503 may update the smart contract or it may create a subcontract 1509 for the first communication device 1501 for allowing the first communication device 1501 to access the communication service according to the smart contract established for providing access to the communication service for the second communication device .

The communication network component 1503 may transmit a pre-authentication request 1510, which may include a symmetric authentication key for network authentication generated by the communication network component 1503 and which may be encrypted with the communication service key of the first communication device 1501. The first communication device 1501 may store 1511 the symmetric authentication key for network authentication generated by the communication after decrypting the received request with the private key pair of the communication service key of the first communication device 1501. The authentication procedure may be completed 1512 between the first communication device 1501 and the communication network component 1503, and an onboarding accept 1513 may be transmitted to the first communication device 1501.

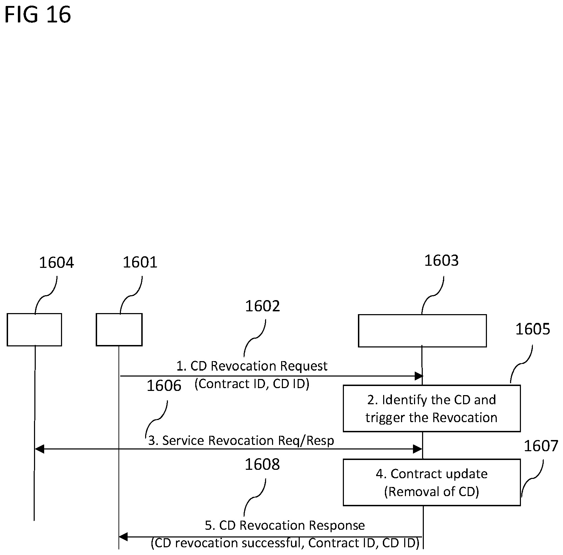

FIG 16 shows schematically an exemplary illustration for a communication flow for revocation in accordance with various embodiments. The second communication device 1601 sends a revocation request message 1602 to the communication network component 1603. The revocation request message 1602 may include the smart contract identifier and the identifier of the first communication device 1604. The communication network component 1603 may identify 1605 the first communication device 1604 and initiates a service revocation request and response process 1606 with the first communication device 1604.

The communication network component 1603 may update the smart contract 1607 by removing the details of the first communication device 1604 in accordance with the revocation request message. The communication network component 1603 may send a revocation response message 1608 to the second communication device 1602, which may include an indication that the revocation is succeeded, the smart contract identifier, and the identifier of the first communication device 1604.

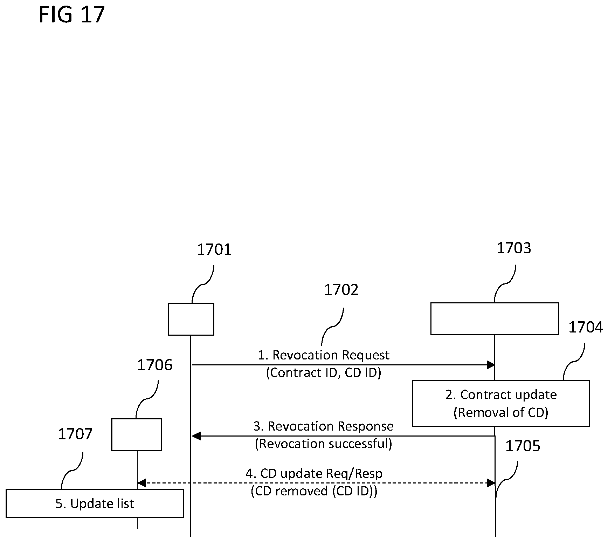

FIG 17 shows schematically another exemplary illustration for a communication flow for revocation in accordance with various embodiments. The first communication device 1701 sends a revocation request message 1702 to the communication network component 1703. The revocation request 1702 may include the smart contract identifier and the identifier for the first communication device 1701.

The communication network component 1703 may update the smart contract 1704 accordingly by removing the first communication device 1701, or alternatively, it may revoke the issued sub-smart contract in accordance with the received revocation request message. The communication network component 1703 may send a revocation response message to the first communication device 1701. The communication network component 1703 may also initiate communication 1705 with the second communication device 1706. The initiated communication 1705 with the second communication device 1706 may include transmitting the identifier of the first communication device 1701, so that the second communication device 1706 may update its list 1707.

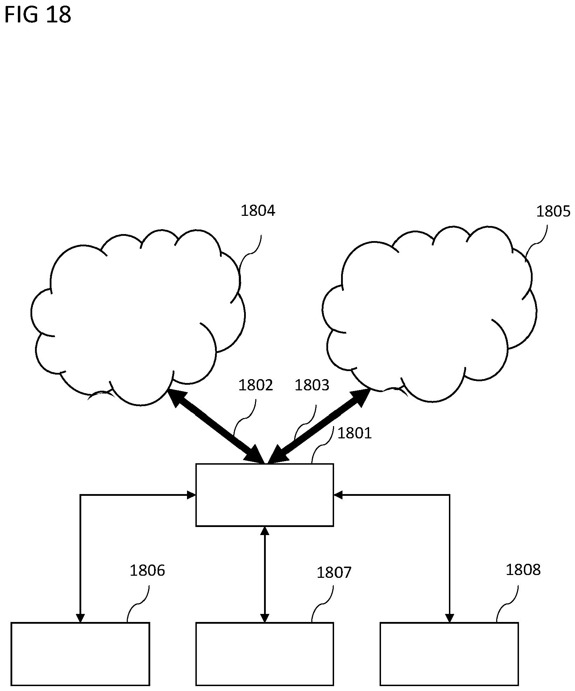

FIG 18 shows schematically an exemplary illustration of a portion of another network in accordance with various embodiments. In an example, the second communication device 1801 may have established access with a plurality of smart contracts 1802, 1803 for a plurality of communication services 1804, 1805. The second communication device 1801 may determine for which smart contract the second communication device 1801 is going to originate a communication service key for which of the first communication devices 1806, 1807, 1808, and the second communication device 1801 may issue the respective communication service keys for each of the first communication devices 1806, 1807, 1808, and/or the identifier for each of the first communication devices 1806, 1807, 1808 accordingly.

In an example, the second communication device may separate that a first communication service 1804 is used for internal/private purposes, such as access for employees or family, and a second communication service 1805 is used for the guests or for public purposes. Such arrangements may be made in accordance with various embodiments under this disclosure.

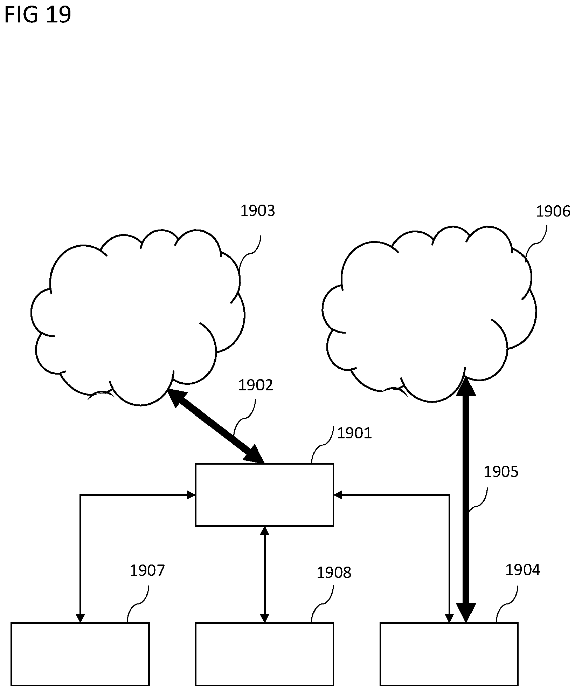

FIG 19 shows schematically an exemplary illustration of a portion of another network in accordance with various embodiments. In an example, the second communication device 1901 may have established access with a smart contract 1902, for a first communication service 1903, and one of the first communication devices 1904 may have established a smart contract for a second communication service 1906 while the first communication device 1904 also has access to the first communication service 1903 by using the smart contract 1902 of the second communication device 1901.

In an example, the first communication device 1904 may determine which session is to be routed for which communication service 1903, 1906. In another example, the second communication device 1901 may provide a connectivity condition with respect to the first communication service 1903, such that the first communication service may only be used for specific services, such as only internet access. Such arrangements may be made in accordance with various embodiments under this disclosure.

In accordance with various embodiments, the first communication device and the second communication device may be included by a vehicle. In this example, the first communication device may use a communication service with a smart contract which includes information of the second communication device, or in an example, the first communication device may also have standalone connectivity to a communication service. In an example, the second communication device may be a communication device of a vehicle distributor or a vehicle owner or a vehicle manufacturer.

In an example, the second communication device may be a smartphone. In an example, the second communication device may allow the first communication device to use a communication service according to a smart contract, when it is in proximity, e.g. in a certain spatial distance, of the first communication device or in an example of the vehicle. When the second communication device leaves the predetermined proximity of the first communication device, the second communication device may initiate the revocation process in accordance with various embodiments.

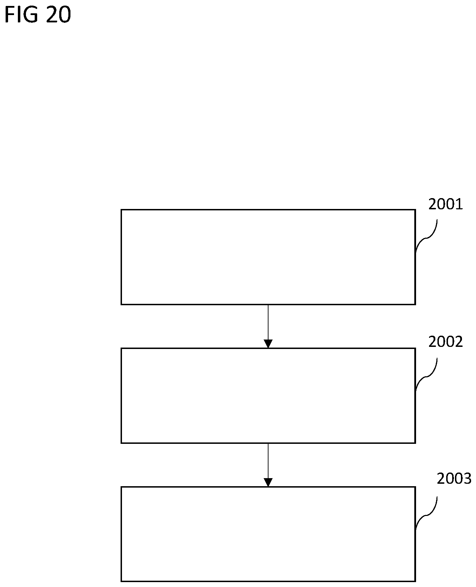

FIG 20 shows schematically an exemplary flow diagram illustration of a method in accordance with various embodiments. A method includes the steps below.

In 2001, receiving a connection request from a first communication device, wherein the connection request includes an indication to a smart contract established for providing access to a communication service for a second communication device, and a communication service key for identification of the first communication device.

In 2002, determining whether the first communication device is allowed to access the communication service according to the smart contract established for providing access to the communication service for the second communication device, based on the communication service key for identification of the first communication device.

In 2003, allowing the first communication device to use the communication service according to the smart contract established for providing access to the communication service for the second communication device, in case the first communication device is allowed to access the communication service according the smart contract established for providing access to the communication service for the second communication device.

In an example, the method may comprise encrypting communication service information using the communication service key of the first communication device and transmitting the encrypted communication service information to the first communication device.

In accordance with various embodiments, a communication device may be the communication device, including: a receiver configured to receive from a further communication device, a communication service key for identification of the communication device and a communication service information which the communication service key is usable for, wherein the communication service information includes an indication to a smart contract established for providing access to the communication service for the further communication device; a transmitter configured to transmit to a communication network component for accessing a communication service a connection request based on the communication service information received from the further communication device, wherein the connection request includes the indication to the smart contract established for providing access to the communication service for the further communication device, and the communication service key for identification of the communication device; and one or more processors configured to identify the communication network component for accessing the communication service which established the smart contract with the further communication device based on the communication service information. In accordance with various embodiments, the communication device is the first communication device.

In accordance with various embodiments, a communication device may be the communication device including a memory configured to store communication service information for a connection to a communication service provider, and a contract information of a smart contract established for providing access to the communication service for the communication device, wherein the contract information includes an indication to the smart contract established for providing access to the communication service for the communication device; one or more processors configured to set up a communication service key for identification of a further communication device, and validate the communication service key for identification of the further communication device in accordance with a received validation request; a receiver configured to receive a validation request for validating the communication service key for identification of the first communication device; a transmitter configured to transmit to the further communication device, the communication service key for identification of the further communication device and communication service information which the communication service key is usable for, wherein the communication service information includes the indication to the smart contract established for providing access to the communication service for the communication device, and to transmit a validation response in case the communication service key for identification of the communication device is validated. In accordance with various embodiments the communication device is the first communication device.

In accordance with various embodiments, any communications transmitted to the communication network component may be encrypted by using the public key of the communication network component. Any communications transmitted to the first communication device may be encrypted by using the public key of the first communication device. Any communications transmitted to the second communication device may be encrypted by using the public key of the second communication device. Any communications transmitted to a communication device, including the key authority, may be encrypted with the public key of the communication device.

In accordance with various embodiments the smart contract may be established for the communication service with the service provider. The establishment of the smart contract for the communication service may be perfomed by the second communication device with the service provider in accordance with various embodiments. Therefore, the smart contract may be established by the second communication device with the service provider, or the smart contract may be established by the second communication device with the communication network component. The establishment of the smart contract between the second communication device and the communication network component may be performed during the smart contract validation between the second communication device and the communication network component.

## Claims

1. A communication network component (505), comprising:
a receiver configured to receive a connection request from a first communication device (501), wherein the connection request comprises an indication to a smart contract established for providing access to a communication service (506) for a second communication device (504), and a communication service key for identification of the first communication device (501); and
one or more processors configured to determine whether the first communication device (501) is allowed to access the communication service (506) according to the smart contract established for providing access to the communication service (506) for the second communication device (504), based on the communication service key for identification of the first communication device (501); and to allow the first communication device (501) to use the communication service (506) according to the smart contract established for providing access to the communication service (506) for the second communication device (504), in case the first communication device (501) is allowed to access the communication service (506) according to the smart contract established for providing access to the communication service (506) for the second communication device (504); wherein the first communication device and the second communication device are two different devices.

2. The communication network component (505) of claim 1,
wherein one or more processors are further configured to determine whether the first communication device (501) is allowed to access the communication service (506) according to the smart contract established for providing access to the communication service (506) for the second communication device (504), in case the connection request further comprises a smart contract indication indicating that the first communication device (501) intends to access the communication service (506) according to the smart contract established for providing access to the communication service (506) for the second communication device (504).

3. The communication network component (505) of any one of claims 1 or 2,
wherein the communication service key of the first communication device (501) comprises a public key of the first communication device (501), wherein the public key of the first communication device (501) is generated by the second communication device (504); and wherein the one or more processors are further configured to determine whether the first communication device (501) is allowed to access the communication service (506) according to the smart contract established for providing access to the communication service (506) for the second communication device (504) based on the communication service key of the first communication device (501) by verifying that the communication service key of the first communication device (501) originates from the second communication device (504).

4. The communication network component (505) of any one of claims 1 or 2,
wherein the communication service key of the first communication device (501) comprises the public key of the first communication (501) device signed by the second communication device (504); and
the one or more processors are further configured to determine whether the first communication device (501) is allowed to access the communication service (506) according to the smart contract established for providing access to the communication service (506) for the second communication device (504) based on the communication service key of the first communication device (501) by verifying that the communication service key of the first communication device (501) is signed by the private key of the second communication device (504).

5. The communication network component (505) of any one of claims 1 to 4, further comprising:
a transmitter configured to transmit a first communication device (501) validation request to a key authority and the receiver is further configured to receive a first communication device (501) validation response from the key authority.

6. The communication network component (505) of any one of claims 1 to 4, further comprising:
a transmitter configured to transmit a first communication device (501) validation request to the second communication device (504) and the receiver is further configured to receive a first communication device (501) validation response from the second communication device (504).

7. The communication network component (505) of any one of claims 5 or 6,
wherein the one or more processors are further configured to determine whether the first communication device (501) is allowed to access the communication service (506) according to the smart contract established for providing access to the communication service (506) for the second communication device (504), based on the first communication device (501) validation response.

8. The communication network component (505) of any one of claims 1 to 7,
wherein the one or more processors are further configured to update the smart contract established for providing access to the communication service (506) for the second communication device (504) by including the information of the first communication device (501), in case the first communication device (501) is allowed to access the communication service (506) according to the smart contract established for providing access to the communication service (506) for the second communication device (504).

9. The communication network component (505) of any one of claims 1 to 8,
wherein the one or more processors are further configured to reject the first communication device (501) to use the communication service (506) according to the smart contract established for providing access to the communication service (506) for the second communication device (504), in case the first communication device (501) is not allowed to access the communication service (506) according to the smart contract established for providing access to the communication service (506) for the second communication device (504).

10. The communication network component (505) of any one of claims 1 to 9,
wherein the one or more processors are configured to allow the first communication device (501) to use the communication service (506) by allowing the first communication device (501) to use the communication service (506) according to a communication policy based on the smart contract established for providing access to the communication service (506) for the second communication device (504).

11. The communication network component (505) of any one of claims 1 to 10,
wherein the one or more processors are further configured to revoke the permission of the first communication device (501) to access the communication service (506) according to the smart contract established for providing access to the communication service (506) for the second communication device (504), in case a first communication device (501) revocation request is received from the first communication device (501) or the second communication device (504).

12. A communication device, comprising:
a receiver configured to receive from a further communication device, a communication service key for identification of the communication device and a communication service information which the communication service key is usable for, wherein the communication service information comprises an indication to a smart contract established for providing access to the communication service (506) for the further communication device;
a transmitter configured to transmit to a communication network component (505) for accessing a communication service (506) a connection request based on the communication service information received from the further communication device, wherein the connection request comprises the indication to the smart contract established for providing access to the communication service (506) for the further communication device, and the communication service key for identification of the communication device; and
one or more processors configured to identify the communication network component (505) for accessing the communication service (506) which established the smart contract with the further communication device based on the communication service information;
wherein the communication device and the further communication device are two different devices.

13. A communication device, comprising:
a memory configured to store communication service information for a connection to a communication service (506) provider, and a contract information of a smart contract established for providing access to the communication service (506) for the communication device, wherein the contract information comprises an indication to the smart contract established for providing access to the communication service (506) for the communication device;
one or more processors configured to set up a communication service key for identification of a further communication device, and validate the communication service key for identification of the further communication device in accordance with a received validation request;
a receiver configured to receive a validation request for validating the communication service key for identification of the first communication device (501);
a transmitter configured to transmit to the further communication device, the communication service key for identification of the further communication device and communication service information which the communication service key is usable for, wherein the communication service information comprises the indication to the smart contract established for providing access to the communication service (506) for the communication device, and to transmit a validation response in case the communication service key for identification of the communication device is validated;
wherein the communication device and the further communication device are two different devices.

14. A method comprising:
receiving a connection request from a first communication device (501), wherein the connection request comprises an indication to a smart contract established for providing access to a communication service (506) for a second communication device (504), and a communication service key for identification of the first communication device (501);
determining whether the first communication device (501) is allowed to access the communication service (506) according to the smart contract established for providing access to the communication service (506) for the second communication device (504), based on the communication service key for identification of the first communication device (501); and;
allowing the first communication device (501) to use the communication service (506) according to the smart contract established for providing access to the communication service (506) for the second communication device (504), in case the first communication device (501) is allowed to access the communication service (506) according to the smart contract established for providing access to the communication service (506) for the second communication device (504);
wherein the first communication device and the second communication device are two different devices.

15. A computer readable medium having stored a plurality of instructions, when carried out by one or more processors, implement a method according to claim 14.

## Patentansprüche

1. Eine Kommunikationsnetzkomponente (505), aufweisend:
einen Empfänger, der eingerichtet ist, um eine Verbindungsanforderung von einer ersten Kommunikationsvorrichtung (501) zu empfangen, wobei die Verbindungsanforderung einen Hinweis auf einen intelligenten Vertrag, der eingerichtet wurde, um einer zweiten Kommunikationsvorrichtung (504) Zugang zu einem Kommunikationsdienst (506) bereitzustellen, und einen Kommunikationsdienstschlüssel zur Identifizierung der ersten Kommunikationsvorrichtung (501) aufweist; und
einen oder mehrere Prozessoren, die eingerichtet sind, um basierend auf dem Kommunikationsdienstschlüssel zur Identifizierung der ersten Kommunikationsvorrichtung (501) zu bestimmen, ob die erste Kommunikationsvorrichtung (501) gemäß dem intelligenten Vertrag, der zum Bereitstellen des Zugangs zum Kommunikationsdienst (506) für die zweite Kommunikationsvorrichtung (504) eingerichtet wurde, auf den Kommunikationsdienst (506) zugreifen darf; und der ersten Kommunikationsvorrichtung (501) zu gestatten, den Kommunikationsdienst (506) gemäß dem intelligenten Vertrag zu nutzen, der für die Bereitstellung des Zugangs zum Kommunikationsdienst (506) für die zweite Kommunikationsvorrichtung (504) eingerichtet wurde, falls der ersten Kommunikationsvorrichtung (501) gestattet ist, auf den Kommunikationsdienst (506) gemäß dem intelligenten Vertrag zuzugreifen, der für die Bereitstellung des Zugangs zum Kommunikationsdienst (506) für die zweite Kommunikationsvorrichtung (504) eingerichtet wurde; wobei die erste Kommunikationsvorrichtung und die zweite Kommunikationsvorrichtung zwei unterschiedliche Vorrichtungen sind.

2. Die Kommunikationsnetzkomponente (505) nach Anspruch 1,
wobei ein oder mehrere Prozessoren ferner eingerichtet sind, um zu bestimmen, ob es der ersten Kommunikationsvorrichtung (501) gestattet ist, auf den Kommunikationsdienst (506) gemäß dem intelligenten Vertrag zuzugreifen, der eingerichtet wurde, um der zweiten Kommunikationsvorrichtung (504) Zugang zum Kommunikationsdienst (506) bereitzustellen, falls die Verbindungsanforderung ferner eine intelligente Vertragsangabe aufweist, die angibt, dass die erste Kommunikationsvorrichtung (501) beabsichtigt, auf den Kommunikationsdienst (506) gemäß dem intelligenten Vertrag zuzugreifen, der eingerichtet wurde, um der zweiten Kommunikationsvorrichtung (504) Zugang zum Kommunikationsdienst (506) bereitzustellen.

3. Die Kommunikationsnetzkomponente (505) nach irgendeinem der Ansprüche 1 oder 2,
wobei der Kommunikationsdienstschlüssel der ersten Kommunikationsvorrichtung (501) einen öffentlichen Schlüssel der ersten Kommunikationsvorrichtung (501) aufweist, wobei der öffentliche Schlüssel der ersten Kommunikationsvorrichtung (501) von der zweiten Kommunikationsvorrichtung (504) erzeugt wird; und
wobei der eine oder die mehreren Prozessoren ferner eingerichtet sind, um basierend auf dem Kommunikationsdienstschlüssel der ersten Kommunikationsvorrichtung (501) zu bestimmen, ob es der ersten Kommunikationsvorrichtung (501) gestattet ist, auf den Kommunikationsdienst (506) gemäß dem intelligenten Vertrag zuzugreifen, der eingerichtet wurde, um der zweiten Kommunikationsvorrichtung (504) Zugang zu dem Kommunikationsdienst (506) bereitzustellen, indem überprüft wird, ob der Kommunikationsdienstschlüssel der ersten Kommunikationsvorrichtung (501) von der zweiten Kommunikationsvorrichtung (504) stammt.

4. Die Kommunikationsnetzkomponente (505) nach irgendeinem der Ansprüche 1 oder 2,
wobei der Kommunikationsdienstschlüssel der ersten Kommunikationsvorrichtung (501) den öffentlichen Schlüssel der ersten Kommunikationsvorrichtung (501) aufweist, der von der zweiten Kommunikationsvorrichtung (504) signiert wurde; und der eine oder die mehreren Prozessoren ferner eingerichtet sind, um basierend auf dem Kommunikationsdienstschlüssel der ersten Kommunikationsvorrichtung (501) zu bestimmen, ob die erste Kommunikationsvorrichtung (501) auf den Kommunikationsdienst (506) gemäß dem intelligenten Vertrag zugreifen darf, der eingerichtet wurde, um der zweiten Kommunikationsvorrichtung (504) Zugang zu dem Kommunikationsdienst (506) bereitzustellen, indem überprüft wird, ob der Kommunikationsdienstschlüssel der ersten Kommunikationsvorrichtung (501) von dem privaten Schlüssel der zweiten Kommunikationsvorrichtung (504) signiert ist.

5. Die Kommunikationsnetzkomponente (505) nach irgendeinem der Ansprüche 1 bis 4, ferner aufweisend:
einen Sender, der eingerichtet ist, um eine Anforderung zur Validierung der ersten Kommunikationsvorrichtung (501) an eine Schlüsselbehörde zu senden, und der Empfänger ist ferner eingerichtet, um eine Antwort zur Validierung der ersten Kommunikationsvorrichtung (501) von der Schlüsselbehörde zu empfangen.

6. Die Kommunikationsnetzkomponente (505) nach irgendeinem der Ansprüche 1 bis 4, ferner aufweisend:
einen Sender, der eingerichtet ist, um eine Anforderung zur Validierung der ersten Kommunikationsvorrichtung (501) an die zweite Kommunikationsvorrichtung (504) zu senden, und der Empfänger ist ferner eingerichtet, um eine Antwort zur Validierung der ersten Kommunikationsvorrichtung (501) von der zweiten Kommunikationsvorrichtung (504) zu empfangen.

7. Die Kommunikationsnetzkomponente (505) nach irgendeinem der Ansprüche 5 oder 6,
wobei der eine oder die mehreren Prozessoren ferner eingerichtet sind, um basierend auf der Validierungsantwort der ersten Kommunikationsvorrichtung (501) zu bestimmen, ob die erste Kommunikationsvorrichtung (501) gemäß dem intelligenten Vertrag, der eingerichtet wurde, um der zweiten Kommunikationsvorrichtung (504) Zugang zum Kommunikationsdienst (506) bereitzustellen, auf den Kommunikationsdienst (506) zugreifen darf.

8. Die Kommunikationsnetzkomponente (505) nach irgendeinem der Ansprüche 1 bis 7,
wobei der eine oder die mehreren Prozessoren ferner eingerichtet sind, um den intelligenten Vertrag, der zum Bereitstellen des Zugangs zu dem Kommunikationsdienst (506) für die zweite Kommunikationsvorrichtung (504) eingerichtet ist, zu aktualisieren, indem sie die Information der ersten Kommunikationsvorrichtung (501) einfügt, falls es der ersten Kommunikationsvorrichtung (501) gestattet ist, auf den Kommunikationsdienst (506) gemäß dem intelligenten Vertrag zuzugreifen, der zum Bereitstellen des Zugangs zu dem Kommunikationsdienst (506) für die zweite Kommunikationsvorrichtung (504) eingerichtet ist.

9. Die Kommunikationsnetzkomponente (505) nach irgendeinem der Ansprüche 1 bis 8,
wobei der eine oder die mehreren Prozessoren ferner so eingerichtet sind, dass sie der ersten Kommunikationsvorrichtung (501) die Nutzung des Kommunikationsdienstes (506) gemäß dem intelligenten Vertrag, der zum Bereitstellen des Zugangs zu dem Kommunikationsdienst (506) für die zweite Kommunikationsvorrichtung (504) eingerichtet wurde, verweigern, falls die erste Kommunikationsvorrichtung (501) nicht auf den Kommunikationsdienst (506) gemäß dem intelligenten Vertrag, der zum Bereitstellen des Zugangs zu dem Kommunikationsdienst (506) für die zweite Kommunikationsvorrichtung (504) eingerichtet wurde, zugreifen darf.

10. Die Kommunikationsnetzkomponente (505) nach irgendeinem der Ansprüche 1 bis 9,
wobei der eine oder die mehreren Prozessoren eingerichtet sind, um der ersten Kommunikationsvorrichtung (501) die Nutzung des Kommunikationsdienstes (506) zu gestatten, indem sie der ersten Kommunikationsvorrichtung (501) die Nutzung des Kommunikationsdienstes (506) gemäß einer Kommunikationsrichtlinie basierend auf dem intelligenten Vertrag gestatten, der eingerichtet wurde, um der zweiten Kommunikationsvorrichtung (504) Zugang zum Kommunikationsdienst (506) bereitzustellen.

11. Die Kommunikationsnetzkomponente (505) nach irgendeinem der Ansprüche 1 bis 10,
wobei der eine oder die mehreren Prozessoren ferner eingerichtet sind, um die Erlaubnis der ersten Kommunikationsvorrichtung (501), auf den Kommunikationsdienst (506) zuzugreifen, gemäß dem intelligenten Vertrag zu widerrufen, der eingerichtet wurde, um der zweiten Kommunikationsvorrichtung (504) Zugang zu dem Kommunikationsdienst (506) bereitzustellen, falls eine Widerrufsanforderung der ersten Kommunikationsvorrichtung (501) von der ersten Kommunikationsvorrichtung (501) oder der zweiten Kommunikationsvorrichtung (504) empfangen wird.

12. Eine Kommunikationsvorrichtung, aufweisend:
einen Empfänger, der eingerichtet ist, um von einer weiteren Kommunikationsvorrichtung einen Kommunikationsdienstschlüssel zur Identifizierung der Kommunikationsvorrichtung und eine Kommunikationsdienstinformation zu empfangen, für die der Kommunikationsdienstschlüssel verwendbar ist, wobei die Kommunikationsdienstinformation einen Hinweis auf einen intelligenten Vertrag aufweist, der eingerichtet wurde, um der weiteren Kommunikationsvorrichtung Zugang zu dem Kommunikationsdienst (506) bereitzustellen;
einen Sender, der eingerichtet ist, um an eine Kommunikationsnetzkomponente (505) zum Zugang zu einem Kommunikationsdienst (506) eine Verbindungsanforderung basierend auf der von der weiteren Kommunikationsvorrichtung empfangenen Kommunikationsdienstinformation zu übertragen, wobei die Verbindungsanforderung den Hinweis auf den intelligenten Vertrag, der eingerichtet wurde, um der weiteren Kommunikationsvorrichtung Zugang zu dem Kommunikationsdienst (506) bereitzustellen, und den Kommunikationsdienstschlüssel zur Identifizierung der Kommunikationsvorrichtung aufweist; und
einen oder mehrere Prozessoren, die eingerichtet sind, um die Kommunikationsnetzkomponente (505) für den Zugang zu dem Kommunikationsdienst (506) zu identifizieren, der den intelligenten Vertrag mit der weiteren Vorrichtung basierend auf der Kommunikationsdienstinformation erstellt hat;
wobei die Kommunikationsvorrichtung und die weitere Kommunikationsvorrichtung zwei unterschiedliche Vorrichtungen sind.

13. Eine Kommunikationsvorrichtung, aufweisend:
einen Speicher, der eingerichtet ist, um Kommunikationsdienstinformation für eine Verbindung zu einem Anbieter eines Kommunikationsdienstes (506), und eine Vertragsinformation eines intelligenten Vertrags, der eingerichtet wurde, um der Kommunikationsvorrichtung Zugang zu dem Kommunikationsdienst (506) bereitzustellen, zu speichern, wobei die Vertragsinformation einen Hinweis auf den intelligenten Vertrag aufweist, der eingerichtet wurde, um der Kommunikationsvorrichtung Zugang zu dem Kommunikationsdienst (506) bereitzustellen;
einen oder mehrere Prozessoren, eingerichtet zum Einrichten eines Kommunikationsdienstschlüssels zur Identifizierung einer weiteren Kommunikationsvorrichtung und zum Validieren des Kommunikationsdienstschlüssels zur Identifizierung der weiteren Kommunikationsvorrichtung gemäß einer empfangenen Validierungsanforderung;
einen Empfänger, der eingerichtet ist, um eine Validierungsanforderung zur Validierung des Kommunikationsdienstschlüssels zur Identifizierung der ersten Vorrichtung (501) zu empfangen;
einen Sender, der eingerichtet ist, um den Kommunikationsdienstschlüssel zur Identifizierung der weiteren Vorrichtung und eine Kommunikationsdienstinformation, für die der Kommunikationsdienstschlüssel verwendbar ist, an die weitere Kommunikationsvorrichtung zu übertragen, wobei die Kommunikationsdienstinformation den Hinweis auf den intelligenten Vertrag aufweist, der eingerichtet wurde, um Zugang zu dem Kommunikationsdienst (506) für die Kommunikationsvorrichtung bereitzustellen, und um eine Validierungsantwort zu übertragen, falls der Kommunikationsdienstschlüssel zur Identifizierung der Vorrichtung validiert wird;
wobei die Kommunikationsvorrichtung und die weitere Kommunikationsvorrichtung zwei unterschiedliche Vorrichtungen sind.

14. Ein Verfahren, aufweisend:
Empfangen einer Verbindungsanforderung von einer ersten Kommunikationsvorrichtung (501), wobei die Verbindungsanforderung einen Hinweis auf einen intelligenten Vertrag, der eingerichtet wurde, um einer zweiten Kommunikationsvorrichtung (504) Zugang zu einem Kommunikationsdienst (506) bereitzustellen, und einen Kommunikationsdienstschlüssel zur Identifizierung der ersten Kommunikationsvorrichtung (501) aufweist;
Bestimmen, ob die erste Kommunikationsvorrichtung (501) auf den Kommunikationsdienst (506) gemäß dem intelligenten Vertrag, der eingerichtet wurde, um der zweiten Kommunikationsvorrichtung (504) Zugang zum Kommunikationsdienst (506) bereitzustellen, zugreifen darf, basierend auf dem Kommunikationsdienstschlüssel zur Identifizierung der ersten Kommunikationsvorrichtung (501); und;
es der ersten Kommunikationsvorrichtung (501) gestatten, den Kommunikationsdienst (506) gemäß dem intelligenten Vertrag zu nutzen, der für die Bereitstellung des Zugangs zu dem Kommunikationsdienst (506) für die zweite Kommunikationsvorrichtung (504) eingerichtet wurde, für den Fall, dass der ersten Kommunikationsvorrichtung (501) der Zugang zu dem Kommunikationsdienst (506) gemäß dem intelligenten Vertrag gestattet ist, der für die Bereitstellung des Zugangs zu dem Kommunikationsdienst (506) für die zweite Kommunikationsvorrichtung (504) eingerichtet wurde;
wobei die erste Kommunikationsvorrichtung und die zweite Kommunikationsvorrichtung zwei unterschiedliche Vorrichtungen sind.

15. Ein computerlesbares Medium, auf dem eine Mehrzahl von Befehlen gespeichert ist, die, wenn sie von einem oder mehreren Prozessoren ausgeführt werden, ein Verfahren gemäß Anspruch 14 implementieren.

## Revendications

1. Composant de réseau de communication (505), comprenant :
un récepteur configuré pour recevoir une demande de connexion d'un premier dispositif de communication (501), dans lequel la demande de connexion comprend une indication à un contrat intelligent établi pour fournir de l'accès à un service de communication (506) pour un deuxième dispositif de communication (504), et une clé de service de communication pour l'identification du premier dispositif de communication (501) ;
un ou plusieurs processeurs configurés pour déterminer si le premier dispositif de communication (501) est autorisé à accéder au service de communication (506) selon le contrat intelligent établi pour fournir de l'accès au service de communication (506) pour le deuxième dispositif de communication (504), sur la base de la clé de service de communication pour l'identification du premier dispositif de communication (501) ; et pour autoriser le premier dispositif de communication (501) à utiliser le service de communication (506) selon le contrat intelligent établi pour fournir de l'accès au service de communication (506) pour le deuxième dispositif de communication (504), dans le cas où le premier dispositif de communication (501) est autorisé à accéder au service de communication (506) selon le contrat intelligent établi pour fournir de l'accès au service de communication (506) pour le deuxième dispositif de communication (504) ; dans lequel le premier dispositif de communication et le deuxième dispositif de communication sont deux dispositifs différents.

2. Composant de réseau de communication (505) selon la revendication 1,
dans lequel un ou plusieurs processeurs sont en outre configurés pour déterminer si le premier dispositif de communication (501) est autorisé à accéder au service de communication (506) selon le contrat intelligent établi pour fournir de l'accès au service de communication (506) pour le deuxième dispositif de communication (504), dans le cas où la demande de connexion comprend en outre une indication de contrat intelligent indiquant que le premier dispositif de communication (501) a l'intention d'accéder au service de communication (506) selon le contrat intelligent établi pour fournir de l'accès au service de communication (506) pour le deuxième dispositif de communication (504).

3. Composant de réseau de communication (505) selon l'une quelconque des revendications 1 ou 2,
dans lequel la clé de service de communication du premier dispositif de communication (501) comprend une clé publique du premier dispositif de communication (501), la clé publique du premier dispositif de communication (501) étant générée par le deuxième dispositif de communication (504) ; et dans lequel ledit un ou lesdits plusieurs processeurs sont en outre configurés pour déterminer si le premier dispositif de communication (501) est autorisé à accéder au service de communication (506) selon le contrat intelligent établi pour fournir de l'accès au service de communication (506) pour le deuxième dispositif de communication (504) sur la base de la clé de service de communication du premier dispositif de communication (501) en vérifiant que la clé de service de communication du premier dispositif de communication (501) provient du deuxième dispositif de communication (504).

4. Composant de réseau de communication (505) selon l'une quelconque des revendications 1 ou 2,
dans lequel la clé de service de communication du premier dispositif de communication (501) comprend la clé publique du premier dispositif de communication (501) signée par le deuxième dispositif de communication (504) ; et
ledit un ou lesdits plusieurs processeurs sont en outre configurés pour déterminer si le premier dispositif de communication (501) est autorisé à accéder au service de communication (506) selon le contrat intelligent établi pour fournir de l'accès au service de communication (506) pour le deuxième dispositif de communication (504) sur la base de la clé de service de communication du premier dispositif de communication (501) en vérifiant que la clé de service de communication du premier dispositif de communication (501) est signée par la clé privée du deuxième dispositif de communication (504).

5. Composant de réseau de communication (505) selon l'une quelconque des revendications 1 à 4, comprenant en outre :
un émetteur configuré pour transmettre une demande de validation de premier dispositif de communication (501) à une autorité de clé et le récepteur est en outre configuré pour recevoir une réponse de validation de premier dispositif de communication (501) de l'autorité de clé.

6. Composant de réseau de communication (505) selon l'une quelconque des revendications 1 à 4, comprenant en outre :
un émetteur configuré pour transmettre une demande de validation de premier dispositif de communication (501) au deuxième dispositif de communication (504) et le récepteur est en outre configuré pour recevoir une réponse de validation de premier dispositif de communication (501) du deuxième dispositif de communication (504).

7. Composant de réseau de communication (505) selon l'une quelconque des revendications 5 ou 6,
dans lequel ledit un ou lesdits plusieurs processeurs sont en outre configurés pour déterminer si le premier dispositif de communication (501) est autorisé à accéder au service de communication (506) selon le contrat intelligent établi pour fournir de l'accès au service de communication (506) pour le deuxième dispositif de communication (504), sur la base de la réponse de validation de premier dispositif de communication (501).

8. Composant de réseau de communication (505) selon l'une quelconque des revendications 1 à 7,
dans lequel ledit un ou lesdits plusieurs processeurs sont en outre configurés pour mettre à jour le contrat intelligent établi pour fournir de l'accès au service de communication (506) pour le deuxième dispositif de communication (504) en incluant les informations du premier dispositif de communication (501), au cas où le premier dispositif de communication (501) est autorisé à accéder au service de communication (506) selon le contrat intelligent établi pour fournir de l'accès au service de communication (506) pour le deuxième dispositif de communication (504).

9. Composant de réseau de communication (505) selon l'une quelconque des revendications 1 à 8,
dans lequel ledit un ou lesdits plusieurs processeurs sont en outre configurés pour refuser au premier dispositif de communication (501) d'utiliser le service de communication (506) selon le contrat intelligent établi pour fournir de l'accès au service de communication (506) pour le deuxième dispositif de communication (504), au cas où le premier dispositif de communication (501) n'est pas autorisé à accéder au service de communication (506) selon le contrat intelligent établi pour fournir de l'accès au service de communication (506) pour le deuxième dispositif de communication (504).

10. Composant de réseau de communication (505) selon l'une quelconque des revendications 1 à 9,
dans lequel ledit un ou lesdits plusieurs processeurs sont configurés pour permettre au premier dispositif de communication (501) d'utiliser le service de communication (506) en autorisant le premier dispositif de communication (501) à utiliser le service de communication (506) conformément à une politique de communication basée sur le contrat intelligent établi pour fournir de l'accès au service de communication (506) pour le deuxième dispositif de communication (504).

11. Composant de réseau de communication (505) selon l'une quelconque des revendications 1 à 10,
dans lequel ledit un ou lesdits plusieurs processeurs sont en outre configurés pour révoquer l'autorisation du premier dispositif de communication (501) d'accéder au service de communication (506) selon le contrat intelligent établi pour fournir de l'accès au service de communication (506) pour le deuxième dispositif de communication (504), au cas où une demande de révocation de premier dispositif de communication (501) est reçue du premier dispositif de communication (501) ou du deuxième dispositif de communication (504).

12. Dispositif de communication, comprenant :
un récepteur configuré pour recevoir d'un autre dispositif de communication une clé de service de communication pour l'identification du dispositif de communication et une information de service de communication pour laquelle la clé de service de communication est utilisable, l'information de service de communication comprenant une indication à un contrat intelligent établi pour fournir de l'accès au service de communication (506) pour l'autre dispositif de communication ;
un émetteur configuré pour transmettre à un composant de réseau de communication (505) pour accéder à un service de communication (506) une demande de connexion basée sur l'information de service de communication reçue de l'autre dispositif de communication, la demande de connexion comprenant l'indication au contrat intelligent établi pour fournir de l'accès au service de communication (506) pour l'autre dispositif de communication, et la clé de service de communication pour l'identification du dispositif de communication ; et
un ou plusieurs processeurs configurés pour identifier le composant de réseau de communication (505) pour accéder au service de communication (506) qui a établi le contrat intelligent avec l'autre dispositif de communication sur la base de l'information de service de communication ;
le dispositif de communication et l'autre dispositif de communication étant deux dispositifs différents.

13. Dispositif de communication, comprenant :
une mémoire configurée pour stocker une information de service de communication pour une connexion à un fournisseur de service de communication (506), et une information de contrat d'un contrat intelligent établi pour fournir de l'accès au service de communication (506) pour le dispositif de communication, dans lequel l'information de contrat comprend une indication sur le contrat intelligent établi pour fournir de l'accès au service de communication (506) pour le dispositif de communication ;
un ou plusieurs processeurs configurés pour établir une clé de service de communication pour l'identification d'un autre dispositif de communication, et valider la clé de service de communication pour l'identification de l'autre dispositif de communication selon une demande de validation reçue ;
un récepteur configuré pour recevoir une demande de validation pour valider la clé de service de communication pour l'identification du premier dispositif de communication (501) ;
un émetteur configuré pour transmettre à l'autre dispositif de communication la clé de service de communication pour l'identification de l'autre dispositif de communication et l'information de service de communication pour laquelle la clé de service de communication est utilisable, l'information de service de communication comprenant l'indication au contrat intelligent établi pour fournir de l'accès au service de communication (506) pour le dispositif de communication, et pour transmettre une réponse de validation au cas où la clé de service de communication pour l'identification du dispositif de communication est validée ;
le dispositif de communication et l'autre dispositif de communication étant deux dispositifs différents.

14. Procédé, comprenant :
la réception d'une demande de connexion d'un premier dispositif de communication (501), la demande de connexion comprenant une indication à un contrat intelligent établi pour fournir de l'accès à un service de communication (506) pour un deuxième dispositif de communication (504), et une clé de service de communication pour l'identification du premier dispositif de communication (501) ;
la détermination si le premier dispositif de communication (501) est autorisé à accéder au service de communication (506) selon le contrat intelligent établi pour fournir de l'accès au service de communication (506) pour le deuxième dispositif de communication (504), sur la base de la clé de service de communication pour l'identification du premier dispositif de communication (501) ; et
l'autorisation du premier dispositif de communication (501) à utiliser le service de communication (506) selon le contrat intelligent établi pour fournir de l'accès au service de communication (506) pour le deuxième dispositif de communication (504), au cas où le premier dispositif de communication (501) est autorisé à accéder au service de communication (506) selon le contrat intelligent établi pour fournir de l'accès au service de communication (506) pour le deuxième dispositif de communication (504) ;
le premier dispositif de communication et le deuxième dispositif de communication étant deux dispositifs différents.

15. Support lisible par ordinateur sur lequel est stockée une pluralité d'instructions qui, lorsqu'elles sont exécutées par un ou plusieurs processeurs, mettent en œuvre un procédé selon la revendication 14.
